# EUROPÄISCHE PATENTANMELDUNG

(11) **EP 4 005 861 A1**
(43) Veröffentlichungstag der Anmeldung: **01.06.2022**
(21) Anmeldenummer: 20210674.6
(22) Anmeldetag: 30.11.2020
(51) Int. Cl.: B60L 53/65, B60L 53/63, B60L 53/66, B60L 53/67, B60L 58/13, B60L 58/14, B60L 58/15, H02J 3/32

(54) **VERFAHREN ZUM PLANEN EINES LEISTUNGSAUSTAUSCHES ZWISCHEN EINER LADEINFRASTRUKTUR UND EINEM ELEKTRISCHEN VERSORGUNGSNETZ**

(71) Anmelder: Wobben Properties GmbH, 26607 Aurich (DE)
(72) Erfinder: Brombach, Johannes, 13437 Berlin (DE); Letzel, Marcus, 28832 Achim (DE); Holicki, Lukas, 28816 Stuhr (DE); Schürmann, Gregor, 28201 Bremen (DE)
(74) Vertreter: Eisenführ Speiser

(57) **Zusammenfassung**

Verfahren zum Planen eines Leistungsaustausches zwischen einer Ladeinfrastruktur (342) und einem elektrischen Versorgungsnetz (344), wobei die Ladeinfrastruktur (342) mehrere Ladeterminals (361-365) zum Anschließen und Laden von Elektrofahrzeugen (351-355) aufweist, sodass die Elektrofahrzeuge (351-355) über die Ladeterminals (361-365) elektrische Leistung mit dem elektrischen Versorgungsnetz (344) austauschen können, jedes Elektrofahrzeug (351-355) einen elektrischen Speicher (371-375) mit variablem Einzelladezustand aufweist, zum Aufnehmen und Abgeben elektrischer Leistung, alle an die Ladeinfrastruktur (342) angeschlossenen Elektrospeicher einen Gesamtspeicher der Ladeinfrastruktur (342) bilden, der durch eine Gesamtspeicherkapazität und einen Gesamtladezustand (236) gekennzeichnet ist, wobei die Gesamtspeicherkapazität variabel ist und der Gesamtladezustand (236) variabel ist, wobei eine Vorhersage von Ankunftszeiten (t1, tn) der Elektrofahrzeuge (351-355) an ihren Ladeterminals (361-365) erstellt wird, und in Abhängigkeit von der Vorhersage der Ankunftszeiten (t1, tn) eine Gesamtladezustandsvorhersage als Vorhersage des Gesamtladezustands (236) für einen Vorhersagezeitraum erstellt wird, wobei die Gesamtladezustandsvorhersage als zeitlicher Verlauf des Gesamtladezustands (236) erstellt wird.

## Beschreibung

Die vorliegende Erfindung betrifft ein Verfahren zum Planen eines Leistungsaustausches zwischen einer Ladeinfrastruktur und einem elektrischen Versorgungsnetz. Die Erfindung betrifft auch eine Ladeinfrastruktur, insbesondere einen Fuhrpark.

Es sind Ideen bekannt, die Elektromobilität auch für Netzwerke nutzbar zu machen, nämlich elektrische Speicher der Elektrofahrzeuge nicht nur bei Bedarf aus einem elektrischen Versorgungsnetz zu laden, sondern auch die Option bereitzustellen, vorübergehend elektrische Leistung aus solchen Elektrospeichern dem elektrischen Versorgungsnetz bereitzustellen. Solche Technologien sind unter dem Begriff "Vehicle-to-Grid" (V2G) zusammengefasst. Dieser Gedanke wird beispielsweise in der internationalen Anmeldung WO 03/062018 A2 beschrieben bzw. in der zugehörigen US-Anmeldung US 2005/0127855 A1.

Für viele Systemdienstleistungen wird aber eine sehr hohe Verfügbarkeit vorausgesetzt. Die Batterien von Fahrzeugen können daher nur dann netzdienlich arbeiten, wenn diese zum richtigen Zeitpunkt mit einem definierten Ladezustand mit einem Ladepunkt verbunden sind. Bei PKWs, jedenfalls soweit sie privat genutzt werden, kann dies meist nicht sichergestellt werden. Aber auch bei elektrischen Kraftfahrzeugen im Logistiksektor kann es zu Abweichungen im Fahrplan kommen, sodass Ladezustand und Zeitpunkt variieren.

Der vorliegenden Erfindung liegt somit die Aufgabe zugrunde, zumindest eines der genannten Probleme zu adressieren. Insbesondere ist es eine Aufgabe der Erfindung, eine Planbarkeit besonders von Zeit und Umfang der Verfügbarkeit von Elektrofahrzeugen zum Stützen des elektrischen Versorgungsnetzes zu verbessern. Zumindest soll zu bisher bekannten Lösungen eine Alternative vorgeschlagen werden.

Erfindungsgemäß wird ein Verfahren nach Anspruch 1 vorgeschlagen. Dieses betrifft somit das Planen eines Leistungsaustausches zwischen einer Ladeinfrastruktur und einem elektrischen Versorgungsnetz. Über diese Ladeinfrastruktur kann somit elektrische Leistung in das elektrische Versorgungsnetz eingespeist werden, aber auch aus dem elektrischen Versorgungsnetz entnommen werden.

Die Ladeinfrastruktur weist mehrere Ladeterminals auf zum Anschließen und Laden von Elektrofahrzeugen. Die Ladeterminals können räumlich verteilt sein, zum Beispiel verschiedene Betriebshöfe (ÖPNV, Stadtreinigung, Müllabfuhr), Depots (Post- und Paketdienstleister), Häfen (Elektroboote, Fähren), Flughafenterminals (Fahrzeuge der Flughafeninfrastruktur, Flugtaxis im Linienbetrieb) umfassen, um einige Beispiele zu nennen. Die Elektrofahrzeuge können somit über diese Ladeterminals elektrische Leistung mit dem elektrischen Versorgungsnetz austauschen. Damit tauscht dann die Ladeinfrastruktur Leistung mit dem elektrischen Versorgungsnetz aus. Ein Ladeterminal kann dabei das Laden oder Entladen eines Elektrospeichers steuern, es kommt aber auch in Betracht, dass die Steuerung oder ein Teil davon in dem Elektrofahrzeug selbst vorgenommen wird, das allerdings an das jeweilige Ladeterminal angeschlossen ist. Auch eine solche Steuerung in dem Elektrofahrzeug kann aber Steuersignale, besonders für aufzunehmende oder abzugebende Leistungswerte, von der Ladeinfrastruktur empfangen.

Jedes Elektrofahrzeug, das somit an die Ladeinfrastruktur angeschlossen werden kann, weist einen elektrischen Speicher mit variablem Einzelladezustand auf, um damit elektrische Leistung aufzunehmen oder abzugeben.

Alle an die Ladeinfrastruktur angeschlossenen Elektrospeicher bilden einen Gesamtspeicher der Ladeinfrastruktur, der durch eine Gesamtspeicherkapazität und einen Gesamtladezustand gekennzeichnet ist. Dieser Gesamtspeicher kann insoweit als virtueller Speicher angesehen werden, in dem die Speicherkapazitäten der einzelnen Elektrofahrzeuge aufsummiert sind.

Die Gesamtspeicherkapazität ist variabel, weil sie nämlich davon abhängt, welche und wie viele Elektrofahrzeuge in dem jeweils betrachteten Moment an die Ladeterminals und damit die Ladeinfrastruktur angeschlossen sind. Mit anderen Worten verringert sich die Gesamtspeicherkapazität, wenn ein Elektrofahrzeug die Ladeinfrastruktur verlässt, also abfährt, und sie erhöht sich, wenn ein Elektrofahrzeug ankommt und angeschlossen wird.

Außerdem ist der Gesamtladezustand variabel. Zusätzlich dazu, dass Elektrofahrzeuge an der Ladeinfrastruktur ankommen können und sie auch wieder verlassen können, ändert sich aber auch ihr jeweiliger individueller Ladezustand, weil sie nämlich geladen oder entladen werden, und das führt somit auch zu einem variablen Gesamtladezustand.

Weiterhin ist vorgesehen, dass eine Vorhersage von Ankunftszeiten der Elektrofahrzeuge an ihren Ladeterminals erstellt wird. Hier wurde besonders erkannt, dass auch bei Fuhrparks, die gewerblich genutzt werden und über Fahrpläne verfügen können, Ankunftszeiten der Elektrofahrzeuge an der Ladeinfrastruktur nicht festliegen bzw. nur schlecht oder ungenau festgelegt werden können. Besonders kann auch der Straßenverkehr für diese Unsicherheit eine Rolle spielen. Abfahrtszeiten sind für das Planen des Leistungsaustausches zwischen der Ladeinfrastruktur und dem elektrischen Versorgungsnetz zwar auch wichtig, aber sie können häufig gut vorgegeben werden.

Daher wird hier vorgeschlagen, für die Ankunftszeiten eine Vorhersage zu erstellen, was unten noch in weiteren Details beschrieben werden wird.

In Abhängigkeit von der Vorhersage der Ankunftszeiten wird eine Gesamtladezustandsvorhersage als Vorhersage des Gesamtladezustands für einen Vorhersagezeitraum erstellt.

Hier wird, auch zum Zwecke der Erläuterung, davon ausgegangen, dass die Elektrofahrzeuge der Ladeinfrastruktur, also insbesondere eines Fuhrparks, am Ende eines Zyklus, insbesondere Tages zur Ladeinfrastruktur zurückkehren, also an ihren Ladeterminals ankommen, wobei dies nach und nach passieren wird. Jedes Mal, wenn dabei ein Elektrofahrzeug ankommt und an sein Ladeterminal und damit die Ladeinfrastruktur angeschlossen wird, erhöht sich die Gesamtkapazität und der Gesamtladezustand des Gesamtspeichers, also dieses virtuellen Gesamtspeichers. Somit kann aus der Vorhersage der Ankunftszeiten eine Vorhersage des Gesamtladezustands abgeleitet und damit erstellt werden. Hier fließt zusätzlich der jeweilige Ladezustand des ankommenden Elektrofahrzeugs ein, insbesondere als Vorhersage dieses Ladezustands.

Dabei wird vorgeschlagen, dass die Gesamtladezustandsvorhersage als zeitlicher Verlauf des Gesamtladezustands erstellt wird. Dieser zeitliche Verlauf des Gesamtladezustands spiegelt somit wider, wie bzw. wann die Elektrofahrzeuge nach und nach an ihrem Ladeterminal und damit an der Ladeinfrastruktur ankommen. Dieser zeitliche Verlauf des Gesamtladezustands kann dann verwendet werden, um den Leistungsaustausch zwischen der Ladeinfrastruktur und dem elektrischen Versorgungsnetz zu planen, insbesondere vorzugeben. Der Leistungsaustausch kann nämlich so geplant werden, dass die gemäß dem zeitlichen Verlauf des Gesamtladezustands zu erwartende verfügbare Energie zum Einspeisen genutzt werden kann, wobei der zeitliche Verlauf angibt, wann wie viel Leistung eingespeist werden kann. Der Gesamtladezustand im Lichte der Gesamtspeicherkapazität gibt aber auch eine Information darüber, wie viel Energie aus dem elektrischen Versorgungsnetz entnommen werden kann, und damit, wie viel Leistung über einen bestimmten Zeitraum aus dem elektrischen Versorgungsnetz entnommen werden kann, um diese Leistung in die Speicher einzuspeichern. Aus dem Gesamtladezustand kann abgeleitet werden, wie viel Energie aus dem Netz genommen werden muss, um den Speicher zu laden.

Insbesondere wird vorgeschlagen, dass die Gesamtladezustandsvorhersage in Abhängigkeit von Fahrplänen der Elektrofahrzeuge erstellt wird. Hier liegt besonders der Gedanke zu Grunde, Fuhrparks zur Planung von Austauschleistung zu verwenden und dabei konkrete Informationen zu geplanten Fahrten der einzelnen Elektrofahrzeuge zu berücksichtigen. Damit kann eine signifikante Verbesserung erreicht werden gegenüber einer rein statistischen Betrachtung einer großen Menge von Elektrofahrzeugen. Ein solcher Fuhrpark, oder eine anders organisierte Gruppe von Elektrofahrzeugen, kann dadurch als gemeinsamer Netzteilnehmer in die Netzplanung einbezogen werden, während gleichwohl die einzelnen Fahrzeuge individuell berücksichtigt werden können. Für den Fuhrpark als eine Einheit ist damit hohe Genauigkeit erreichbar.

Gemäß einem Aspekt wird vorgeschlagen, dass die Gesamtladezustandsvorhersage wenigstens einen Tag vor Beginn des Vorhersagezeitraums erstellt wird. Hier wurde besonders erkannt, dass das Verhalten von Elektrofahrzeugen, insbesondere, wenn sie gewerblich genutzt werden, sich täglich wiederholt und damit eine Planung von einem zum nächsten Tag sinnvoll ist, es kommen aber auch größere Intervalle in Betracht, z.B. eine Woche. Es wurde aber auch zusätzlich erkannt, dass eine Leistungs- oder Energieplanung des elektrischen Versorgungsnetzes üblicherweise wenigstens einen Tag im Voraus durchgeführt wird. Häufig wird mittags oder am frühen Nachmittag eine solche Planung durchgeführt, bei der besonders auch Verbraucher ihr Kontingent ankündigen oder sogar unmittelbar bestellen. Besonders hierbei soll die Ladeinfrastruktur einen Beitrag leisten und daher ist eine Vorausplanung oder Vorhersage wenige Minuten oder Stunden vor dem fraglichen Zeitraum kaum hilfreich, denn dann sind die Planungen im elektrischen Versorgungsnetz bereits abgeschlossen. Es kann bei Anwendungen im Logistikbereich, bei der mehrtägige Zyklen möglich sind, ein mehrtägiger Zeitraum angeboten werden.

Entsprechend ist auch die Vorhersage der Ankunftszeiten wenigstens einen Tag im Voraus zu leisten. Das bedeutet üblicherweise auch, dass kaum aktuelle Werte des jeweiligen Fahrzeugs in die Vorhersage einfließen können, also, ob ein Fahrzeug gerade im Stau steht oder sich verfahren hat. Bei einer Vorausplanung von wenigstens einem Tag sind die jeweiligen Elektrofahrzeuge für den relevanten Tag, an dem die Ankunftszeiten vorhergesagt werden sollen, nämlich meist noch gar nicht losgefahren. Die Vorhersage muss sich somit an anderen Kriterien orientieren, was unten noch erläutert werden wird. Das schließt allerdings nicht aus, dass auch noch in einem kürzeren Zeitraum als einem Tag eine bestehende Vorhersage nachjustiert wird, um eine ebenfalls bereits bestehende Planung auch noch zu korrigieren.

Gemäß einem Aspekt wird vorgeschlagen, dass für jeden Einzelladezustand eine Einzelladezustandsvorhersage erstellt wird, insbesondere als zeitlicher Verlauf des Einzelladezustands, und dass die Gesamtladezustandsvorhersage zusätzlich in Abhängigkeit von den Einzelladezustandsvorhersagen erstellt wird.

Insbesondere kann eine solche Einzelladezustandsvorhersage jeweils den Ladezustand betreffen, der bei Ankunft des jeweiligen Elektrofahrzeugs angenommen, also vorhergesagt wird. Ein zeitlicher Verlauf kann im einfachsten Fall so aussehen, dass dieser Anfangswert über die Zeit konstant ist. Es kommen aber auch Veränderungen nach Ankunft in Betracht, zum Beispiel durch eine geringe Selbstentladung oder durch Funktionen, die auch beim abgestellten Fahrzeug aufrechterhalten werden sollen. Dazu könnte beispielsweise eine Heizung gehören, die gegen Frost betrieben wird, um nur ein Beispiel zu nennen.

In jedem Fall fließt dann die Einzelladezustandsvorhersage in die Gesamtladezustandsvorhersage ein. Besonders wird die Gesamtladezustandsvorhersage zu einem mit der Zeit ansteigenden Gesamtladezustand führen, nämlich durch jeweils weiter ankommende Elektrofahrzeuge.

Gemäß einem Aspekt wird vorgeschlagen, dass die Vorhersage der Ankunftszeiten in Abhängigkeit von wenigstens einer der folgenden Vorhersageinformationen erstellt wird.

Als eine Vorhersageinformation für Ankunftszeiten wird eine Information über einen Fahrplan des jeweiligen Elektrofahrzeugs vorgeschlagen, der geplante Fahrzeiten und optional geplante Fahrstrecken aufweist. Die geplanten Fahrzeiten beinhalten auch eine geplante Ankunftszeit und die kann bei der Vorhersage zugrunde gelegt werden und dann abhängig von weiteren Vorhersageinformationen zur vorhergesagten Ankunftszeit verändert werden. Je nach Fahrzeugtyp kann ein Fahrplan auch repräsentativ stehen für einen Fährplan, einen Flugplan, einen Dienstplan oder disponierte Liefertouren, um nur einige Beispiele zu nennen.

Als eine weitere Vorhersageinformation für Ankunftszeiten wird eine aktuelle Verkehrsinfrastrukturinformation eines für das jeweilige Elektrofahrzeug relevanten Bereichs vorgeschlagen. Solche aktuellen Verkehrsinfrastrukturinformationen sind zum Beispiel Baustellen und/oder Umleitungen. Auch temporäre Geschwindigkeitsbegrenzungen aufgrund von Straßenschäden können hierunter fallen, aber auch die Fertigstellung einer Umgehungsstraße. Daraus kann abgeleitet werden, ob eine eher spätere oder eher frühere Ankunft des Elektrofahrzeugs anzunehmen ist. Dies kann mit einer Information über den Fahrplan kombiniert werden, indem zum Beispiel von der Ankunftszeit gemäß Fahrplan ausgegangen wird, die dann aber basierend auf der Verkehrsinfrastrukturinformation verbessert wird.

Als eine Vorhersageinformation für Ankunftszeiten werden für das jeweilige Elektrofahrzeug abgespeicherte Ankunftszeiten vergangener Tage oder vergangener gleichartiger Touren vorgeschlagen. Besonders kann ein Mittelwert aus diesen Ankunftszeiten vergangener Tage gebildet werden und gegebenenfalls auch eine Streuung dieser Ankunftszeiten berücksichtigt werden. Weitere Informationen wie die genannte Verkehrsinfrastrukturinformation kann hinzukommen, um abzuschätzen, ob der beispielhaft genannte Mittelwert erreicht werden kann, oder eher mit einer Verspätung oder einem früheren Ankommen gerechnet werden kann.

Als eine Vorhersageinformation kann eine Wettervorhersage verwendet werden. Aus einer Wettervorhersage ist direkt oder indirekt eine Auswirkung auf die Ankunftszeiten bestimmbar. Eine indirekte Berücksichtigung kann beispielsweise darin bestehen, dass bei regnerischem Wetter ein höheres Verkehrsaufkommen zu erwarten ist und daher eher mit Verspätung zu rechnen ist, wohingegen bei trockenem sonnigem Wetter mit weniger Verkehrsaufkommen zu rechnen ist. Eine direkte Information lässt sich beispielsweise aus Glatteis oder Schneefall ableiten, denn dann können die Elektrofahrzeuge möglicherweise selbst bei guter Verkehrssituation nicht so schnell fahren.

Als eine Vorhersageinformation für Ankunftszeiten wird eine Information über Ereignisse, die das Verkehrsaufkommen des für das jeweilige Elektrofahrzeug relevanten Bereichs beeinflussen, vorgeschlagen. Solche Ereignisse können angekündigte Demonstrationen oder Großereignisse wie große Sportveranstaltungen sein. Besonders Letztere können, je nach Zeitpunkt, zu einem erhöhten oder verringerten Verkehrsaufkommen führen. Solange die Veranstaltung viele Zuschauer bindet, ist das Verkehrsaufkommen gering, verlassen aber viele Zuschauer die Veranstaltung in einem engen Zeitbereich, ist das Verkehrsaufkommen hoch. Entsprechend beeinflusst das die Ankunftszeiten.

Als Vorhersageinformation kann auch eine Information jeweils über einen Fahrer des jeweiligen Elektrofahrzeugs und/oder über ein Fahrverhalten des jeweiligen Elektrofahrzeugs vorgeschlagen werden. Erfahrungswerte führen regelmäßig dazu, dass manche Fahrer - aus welchen Gründen auch immer - eher früh und andere eher spät zurückkehren. Das kann auch das Fahrverhalten des jeweiligen Elektrofahrzeugs beeinflussen, besonders dann, wenn das Elektrofahrzeug einem Fahrer fest zugeordnet ist. Es kommt aber auch in Betracht, dass die Fahrzeuge sich beispielsweise aus technischen Gründen anders verhalten. Beispielsweise kann mit einem kleinen Fahrzeug leichter ein Stau umfahren werden als mit einem großen Fahrzeug.

Es ist erkennbar und teilweise auch schon erläutert worden, dass all diese Vorhersageinformationen für Ankunftszeiten auch kombiniert betrachtet werden können. Alle diese Vorhersageinformationen sind üblicherweise auch weit über einen Tag vorher bekannt und können daher auch in eine Vorhersage einfließen, die mehr als einen Tag vor dem Vorhersagezeitraum erstellt werden soll.

Gemäß einem Aspekt wird die Einzelladezustandsvorhersage in Abhängigkeit von wenigstens einer der folgenden Vorhersageinformationen für Einzelladezustände erstellt.

Als eine Vorhersageinformation für Einzelladezustände wird eine Information über einen Fahrplan des jeweiligen Elektrofahrzeugs vorgeschlagen, der geplante Fahrzeiten und optional geplante Fahrstrecken aufweist. Aus diesen Fahrzeiten und gegebenenfalls Fahrstrecken kann abgeleitet werden, wie viel Energie das Elektrofahrzeug verbrauchen wird. Entsprechend kann abgeschätzt werden, wie sich sein jeweiliger Einzelladezustand verändert und damit welchen Wert er etwa aufweisen wird, wenn das Elektrofahrzeug zu seiner Ladestation zurückkehrt.

Als eine Vorhersageinformation für Einzelladezustände wird eine Information über Eigenschaften des Elektrofahrzeugs, insbesondere Eigenschaften des Speichers des Elektrofahrzeugs, vorgeschlagen. Besonders ein Abnutzungsgrad des Speichers kommt hier in Betracht. Dieser Abnutzungsgrad des Speichers kann aus seinem Verhalten abgeleitet werden, er kann besonders aber auch daraus abgeleitet werden, wie viele Lade-EntladeZyklen dieser Elektrospeicher bereits durchgemacht hat. Informationen über solche Zyklen liegen der Ladesteuerung häufig vor und sind daher einfach zu erhalten.

Als eine Vorhersageinformation für Einzelladezustände wird eine Information über für das jeweilige Elektrofahrzeug abgespeicherte Einzelladezustände bei Ankunft an dem Ladeterminal gemäß einer Erfassung vergangener Tage oder Touren vorgeschlagen. Es werden also gemessene Einzelladezustände der Vergangenheit berücksichtigt, die jeweils bei Ankunft des Elektrofahrzeugs aufgenommen wurden. Besonders kann hier ein Mittelwert über diese Ladezustände jeweils vergangener Ankunftszeiten gebildet werden. Ergänzend kann eine Streuung solcher Ladezustände berücksichtigt werden. Sofern Randbedingungen gleich geblieben sind, kann ein solcher Mittelwert bereits eine gute Vorhersage für den entsprechenden Einzelladezustand bilden.

Als eine Vorhersageinformation für Einzelladezustände wird eine Information über einen vorgebbaren Einzelladezustand des jeweiligen Elektrofahrzeugs zu Beginn einer Fahrt, wenn das Elektrofahrzeug von seinem Ladeterminal getrennt wird, vorgeschlagen. Somit wird ein Anfangsladezustand berücksichtigt, der zu Beginn der Fahrt vorliegt und von dem dann der zu erwartende Verbrauch abzuziehen ist. Hier ist zu berücksichtigen, dass dieser Anfangseinzelladezustand bei einer Vorhersage von über einem Tag nicht erfasst werden kann, sondern angenommen werden muss. Als Annahme wird ein vorgebbarer Einzelladezustand verwendet, der nämlich auch vorgegeben werden kann, weil er schließlich zu dem Zeitpunkt bestimmt wird, zu dem das Aufladen beendet wurde. Durch entsprechendes Steuern des Ladens kann somit dieser Einzelladezustand vorgegeben werden.

Es geht hier somit um den Beginn der Fahrt unmittelbar vor dem Vorhersagezeitraum. Die zu erstellende Vorhersage wird aber vorzugsweise über einen Tag vorher, also über einen Tag vor Beginn des Vorhersagezeitraums, erstellt und damit auch vor dem Beginn der Fahrt, zu der der vorgebbare Einzelladezustand berücksichtigt wird.

Als eine Vorhersageinformation für Einzelladezustände wird eine aktuelle Verkehrsinfrastrukturinformation eines für das jeweilige Elektrofahrzeug relevanten Bereichs vorgeschlagen. Hier wurde erkannt, dass nicht nur die Ankunftszeit bzw. ihre Verzögerung von solchen Verkehrsinfrastrukturinformationen wie Baustellen oder Umleitungen betroffen sein kann, sondern dass auch der Ladezustand davon abhängt, weil nämlich der Verbrauch dadurch variieren kann.

Als eine Vorhersageinformation für Einzelladezustände wird die Berücksichtigung einer Wettervorhersage vorgeschlagen. Auch hier wurde erkannt, dass das Wetter auch, direkt oder indirekt, Einfluss auf den Verbrauch und damit den Ladezustand haben kann. Die Zusammenhänge können ähnlich sein, wie sie oben für die Vorhersageinformation für Ankunftszeiten beschrieben wurden.

Als Vorhersageinformation für Einzelladezustände wird auch eine Information über Ereignisse, die das Verkehrsaufkommen des für das jeweilige Elektrofahrzeug relevanten Bereichs beeinflussen, vorgeschlagen. Auch solche Ereignisse, die ebenfalls oben bereits erläutert wurden, können den Verbrauch beeinflussen und damit den Ladezustand.

Als Vorhersageinformation für Einzelladezustände wird auch eine Information jeweils über einen Fahrer des jeweiligen Elektrofahrzeugs und/oder über ein Fahrverhalten des jeweiligen Elektrofahrzeugs vorgeschlagen. Auch dies beeinflusst nicht nur wie oben beschrieben die Ankunftszeit, sondern kann auch den Verbrauch beeinflussen.

Als Vorhersageinformation für Einzelladezustände wird auch eine Information über einen Zustand des Elektrofahrzeugs, insbesondere eine Information über einen Zustand des Speichers des Elektrofahrzeugs, vorgeschlagen. Besonders kommt in Betracht, dass ein Elektrospeicher mit zunehmender Abnutzung eine höhere Selbstentladung oder eine geringere Effizienz aufweisen kann, was somit den Ladezustand beeinflusst. Auch ist ein entsprechend abgenutzter Elektrospeicher in seiner Ladekapazität reduziert, was dazu führt, dass ein vollgeladener Zustand geringer ist als bei identischem, aber neuen Elektrospeicher, sodass auch am Ende der Fahrt der verbleibende Ladezustand geringer ist. Auch eine Temperatur eines Speichers eines Elektrofahrzeugs kann eine Vorhersageinformation sein. Die Temperatur eines Elektrospeichers kann sich auch auf dessen Kapazität auswirken, was hiermit berücksichtigt werden kann.

Als eine Vorhersageinformation für Einzelladezustände wird eine Information über eine Modellungenauigkeit oder Fehler einer Erfassung eines Einzelladezustands vorgeschlagen. Eine solche Ungenauigkeit der Erfassung kann besonders relevant sein, wenn dadurch von einem falschen Anfangsladezustand ausgegangen wird, der sich dann auch auf den Endladezustand beim Rückkehren zur Ladestation auswirkt. Aber auch die Erfassung eines Einzelladezustands bei Rückkehr kann relevant sein, nämlich dann, wenn solche Ladezustände aus der Vergangenheit berücksichtigt werden und damit nämlich entsprechend falsch oder ungenau berücksichtigt werden. Auch das wird hier vorgeschlagen, bei der Einzelladezustandsvorhersage zu berücksichtigen.

Auch bei all diesen Informationen, die mögliche Vorhersageinformationen für Einzelladezustände betreffen, kommt eine Kombination jeglicher Informationen in Betracht, wie sich auch aus den Erläuterungen der einzelnen Wirkungen unmittelbar ergibt.

Gemäß einem Aspekt wird vorgeschlagen, dass die Gesamtladezustandsvorhersage, nachdem sie erstellt wurde, in Abhängigkeit von wenigstens einer Änderungsinformation verändert wird. Die Gesamtladezustandsvorhersage kann somit nachjustiert werden. Dies kommt auch noch nach Ablauf eines Tages in Betracht. Hier wurde erkannt, dass eine Vorhersage zwar für einen Zeitraum von über einem Tag wünschenswert ist, manche Änderungen aber unvermeidbar sind und es dann besser ist, die Gesamtvorhersage kurzfristig noch anzupassen und insbesondere entsprechend den Netzbetreiber oder Stromanbieter zu unterrichten.

Besonders kommt in Betracht, dass die Gesamtladezustandsvorhersage dabei in Abhängigkeit von einer Änderung der Vorhersage der Ankunftszeiten und/oder in Abhängigkeit von einer Änderung der Einzelladezustandsvorhersage verändert wird. Diese Änderungen bzw. die Information zu diesen Änderungen kann dann jeweils die Änderungsinformation bilden, oder einen Teil davon.

Vorzugsweise wird die Gesamtvorhersage für mehr als einen Zyklus, insbesondere mehr als einen Tag im Voraus erstellt und geht insbesondere, wie oben erläutert wurde, von diversen Annahmen hinsichtlich der Fahrt der jeweiligen Elektrofahrzeuge aus. Sie antizipiert insbesondere eine Verkehrssituation oder ein Fahrverhalten oder ein Verhalten des Elektrospeichers für einen Zeitraum, der in dem Moment noch nicht begonnen hat. Wenn nun aber während der Fahrt unmittelbar vor dem Vorhersagezeitraum Änderungen auftreten, insbesondere signifikante Änderungen auftreten, wie beispielsweise ein Verkehrsunfall, durch den sich die Ankunftszeit erheblich verspätet, kann dieses eine Änderungsinformation sein, die eine Änderung der Vorhersage der Ankunftszeiten betrifft. Diese geänderte Vorhersage der Ankunftszeit kann auch als Änderungsinformation angesehen werden.

Außerdem weisen Elektrofahrzeuge üblicherweise selbst Sensoren auf, die den Ladezustand ständig ermitteln. Diese Informationen können insbesondere über Funk übertragen werden und es kann überprüft werden, ob die antizipierten Verhalten der jeweiligen Einzelladezustände damit übereinstimmen oder zumindest im Wesentlichen übereinstimmen. Gibt es grobe Abweichungen, so ist anzunehmen, dass es auch zu einer Abweichung des Einzelladezustands zum Ankunftszeitpunkt führt. Diese Annahme ist somit eine Änderung der Einzelladezustandsvorhersage und das bildet eine Änderungsinformation, mit der die Gesamtladezustandsvorhersage verändert, also an die geänderten Zustände angepasst werden kann.

Gemäß einem Aspekt wird vorgeschlagen, dass die Vorhersage der Ankunftszeiten, nachdem sie erstellt wurde, in Abhängigkeit von wenigstens einer Zusatzinformation für Ankunftszeiten verändert wird. Hier wird also ähnlich vorgegangen wie bei der Veränderung der Gesamtladezustandsvorhersage, nachdem sie erstellt wurde. Als mögliche Zusatzinformation für Ankunftszeiten werden die folgenden Informationen zur Verwendung alleine oder in Kombination miteinander vorgeschlagen:
- Eine Information darüber, dass der Fahrplan geändert wurde, insbesondere manuell geändert wurde. Es wurde erkannt, dass auch kurzfristige Fahrplanänderungen in Betracht kommen, zum Beispiel bei Sonderveranstaltungen oder kurzfristigen Umleitungen, und da wird vorgeschlagen, dies zu berücksichtigen und gegebenenfalls die Vorhersage der Ankunftszeiten zu verifizieren.
- Eine Information über eine erfasste Verkehrssituation und/oder über eine kurzfristige Vorhersage einer Verkehrssituation. Hier wurde erkannt, dass auch kurzfristige Änderungen der Verkehrssituation auftreten können, die hier berücksichtigt werden sollten. Ein Unfall kann im Übrigen auch eine kurzfristige Vorhersage einer Verkehrssituation auslösen, denn häufig folgt auf einen Unfall erst ein Stau, sei es an der Unfallstelle oder an bekannten Umgehungsstrecken.
- Eine Information zum aktuellen Wetter oder eine kurzfristige Wettervorhersage, die für den Vorhersageraum erstellt wurde, nachdem die Gesamtladezustandsvorhersage erstellt wurde. Auch hier wurde erkannt, dass Wettervorhersagen heutzutage zwar über mehrere Tage reichen, Wettervorhersagen gleichwohl fehlerbehaftet sein können und sich auch innerhalb eines Tages ändern können. Auch dies wird für ein Nachjustieren der Vorhersage der Ankunftszeiten vorgeschlagen. Hier kann ein aktuelles Wetterphänomen berücksichtigt werden, wie ein auftretendes Schneetreiben, oder dies kann auch in einer kurzfristigen Vorhersage, die über eine Stunde oder wenige Stunden, insbesondere unter zehn Stunden beträgt, erkennbar sein.
- Eine Information über eine Abweichung einer aktuellen Position eines Elektrofahrzeugs von einer geplanten Position gemäß dem Fahrplan. Hier wurde erkannt, dass bereits im Verlaufe des Tages, an dem ein Fahrplan abgefahren wird, Abweichungen erkennbar sind. Oftmals können Verspätungen im Laufe des Tages nicht mehr aufgeholt werden, oder es kann zumindest beurteilt werden, ob bzw. in welchem Umfang solche Verspätungen noch aufgeholt werden können.
- Eine Information über eine Beladung oder durchschnittliche Personenbesetzung des Elektrofahrzeugs. Auch hier wird grundsätzlich ausgehend von einer durchschnittlichen Beladung oder Besetzung die Vorhersage erstellt. Gibt es aber Abweichungen, kann sich das auf die Ankunftszeit auswirken. Besonders bei vielen Personen in einem Fahrzeug des Nahverkehrs kann eine hohe Personenanzahl darauf hindeuten, dass das Fahrzeug zum Ein- und Aussteigen öfter und/oder länger hält. Ähnliche Überlegungen gibt es auch bei einer Beladung eines Elektrofahrzeugs, das entsprechend mehr Zeit zum Entladen benötigt. Auch die Fahrdynamik des Fahrzeugs kann davon betroffen sein und daher wird vorgeschlagen, dies zum Nachjustieren der Vorhersage der Ankunftszeit als Zusatzinformation zu verwenden.

Gemäß einem Aspekt wird vorgeschlagen, dass die Einzelladezustandsvorhersage, nachdem sie erstellt wurde, in Abhängigkeit von wenigstens einer Zusatzinformation für Einzelladezustände verändert wird. Auch hier wurde erkannt, dass kurzfristig, also nach Erstellen der Vorhersage, Änderungen auftreten und den Einzelladezustand jeweils beeinflussen können. Daher wird ein Nachjustieren vorgeschlagen. Dazu sind zur einzelnen oder kombinierten Betrachtung folgende Zusatzinformationen für Einzelzustände als sinnvoll erkannt worden:
- Eine Information über eine erfasste Verkehrssituation und/oder eine kurzfristige Vorhersage einer Verkehrssituation. Es wurde erkannt, dass auch solche kurzfristigen Änderungen der Verkehrssituation erfasst werden können und die Einzelladezustände beeinflussen können. Besonders plötzlich auftretende Staus, die zu einer Umfahrung führen, können den Ladezustand beeinflussen.
- Eine Information zum aktuellen Wetter oder eine kurzfristige Wettervorhersage, die für den Vorhersageraum erstellt wurde, nachdem die Gesamtladezustandsvorhersage erstellt wurde. Solche kurzzeitig geänderten Wettervorhersagen können auch den Ladezustand beeinflussen und daher wird eine Anpassung der Einzelladezustandsvorhersage vorgeschlagen. Vor allem kaltes Wetter kann die Effizienz der Batterie mindern und den Verbrauch der Heizung erhöhen. Gleiches gilt für warmes Wetter und Sonnenschein, welcher zu einem höheren Verbrauch bei der Klimatisierung führen kann.
- Eine Information über eine Abweichung einer aktuellen Position eines Elektrofahrzeugs von einer geplanten Position gemäß dem Fahrplan. Auch Fahrplanabweichungen sind häufig ein Indiz dafür, dass auch das Fahrzeug anders gefahren ist als geplant und damit ein anderer Verbrauch vorliegt, sodass dies Einfluss auf den Ladezustand hat. Besonders wird vorgeschlagen, dass hier eine Position des Elektrofahrzeugs durch eine Ortsüberwachung, insbesondere mittels GPS, durchgeführt und mit dem Fahrplan abgeglichen wird. Auswirkungen auf den Ladezustand können dann beispielsweise auch über Erfahrungswerte abgeleitet werden. Eine solche geänderte Position, demnach das Fahrzeug beispielsweise hinter einem ursprünglichen Fahrplan zurückliegt, kann häufig auch den Hinweis beinhalten, dass auch noch weitere Verzögerungen und Änderungen des Abfahrens des Fahrplans zu erwarten sind. Auch das kann für eine Anpassung der Einzelladezustandsvorgänge genutzt werden.
- Eine Information über eine Beladung oder durchschnittliche Personenbesetzung des Elektrofahrzeugs. Beides beeinflusst das Gewicht des Elektrofahrzeugs und damit seinen Verbrauch. Daher ist ein Nachjustieren der Einzelladezustandsvorhersage als sinnvoll erkannt worden.
- Eine Information über einen Einzelladezustand des Elektrofahrzeugs, insbesondere zusammen mit einem zugeordneten Zeitpunkt und/oder einer zugeordneten Position. Hierdurch kann ein Abgleich mit dem der ursprünglichen Vorhersage zugrundeliegenden Einzelladezustand bzw. Einzelladezustandsverlauf vorgenommen werden. Abhängig davon kann die Anpassung der Einzelladezustandsvorhersage durchgeführt werden. Insbesondere kann eine Echtzeiterfassung des Einzelladezustands durchgeführt werden und somit auch sofort für eine Anpassung der Einzelladezustandsvorhersage verwendet werden.
   Es kommt aber auch in Betracht, einen Zeitpunkt und/oder eine Position zusammen mit dem Einzelladezustand aufzunehmen. Dieser Zeitpunkt bzw. diese Position sind dann ein zugeordneter Zeitpunkt bzw. eine zugeordnete Position. Damit zusammen kann dann noch besser ein Abgleich mit einem Fahrplan vorgenommen werden. Besonders kann geprüft werden, wann an welcher Position welcher tatsächliche Ladezustand auftritt. Liegt beispielsweise der erfasste Ladezustand zwischen einem zu dem Zeitpunkt vorhergesagten oder angenommenen Ladezustand zurück, ist das Fahrzeug aber gegenüber seiner Position nach Fahrplan voraus, hat das eine andere Konsequenz für den vorhergesagten Einzelladezustand - im Idealfall nämlich keine Konsequenz - als wenn der erfasste Ladezustand zurückliegt und das Fahrzeug ansonsten fahrplangemäß unterwegs ist oder sogar zusätzlich zu seinem Fahrplan zurückliegt. Somit kann hierüber ebenfalls ein Nachjustieren der Einzelladezustandsvorhersage durchgeführt werden.

Gemäß einem Aspekt wird vorgeschlagen, dass das Erstellen und/oder Verändern der Vorhersage der Ankunftszeiten, der Einzelladezustandsvorhersage und/oder der Gesamtladezustandsvorhersage mittels eines entsprechenden Vorhersagemodells erfolgt, also mittels eines Vorhersagemodells für Ankunftszeiten, eines Vorhersagemodells für Einzelladezustände bzw. eines Vorhersagemodells für den Gesamtladezustand. Besonders ist in einem solchen Vorhersagemodell jeweils wenigstens eine der beschriebenen Funktionalitäten implementiert.

Das Vorhersagemodell für den Gesamtladezustand kann besonders so ausgebildet sein, dass es die Vorhersagen der Ankunftszeiten und die Vorhersagen der Einzelladezustände als Eingangsgrößen erhält. Das Vorhersagemodell für den Gesamtladezustand kann einen Gesamtladezustandsverlauf besonders dadurch ermitteln, dass zu den jeweiligen Zeiten gemäß den erhaltenen Ankunftszeiten die zugeordneten Einzelladezustände zu einem Gesamtladezustand hinzuaddiert werden. Dadurch kann für jede neue Ankunftszeit ein veränderter Wert für den Gesamtladezustandsverlauf erhalten werden. Der Anfangswert des Gesamtladezustandsverlaufs, bevor der erste Wert des Einzelladezustands hinzuaddiert wird, kann null betragen.

Das Vorhersagemodell für Ankunftszeiten kann beispielsweise auf einem Erfahrungswert oder einer durchschnittlichen Ankunftszeit für das jeweilige Fahrzeug aufbauen und ermittelte Änderungen mit einem Gewichtungsfaktor, der auch 1 sein kann, aufaddieren. Eine Änderung kann darin bestehen, dass der letzte erfasste Wert der Ankunftszeit von der bisher als Durchschnitt ermittelten Ankunftszeit abweicht und diese Abweichung ist dann die zu berücksichtigende Änderung. Für dieses Beispiel kann diese Änderung mit einem positiven Gewichtungsfaktor < 1 multipliziert und aufaddiert werden.

Der Gewichtungsfaktor kann beispielsweise 0,1 betragen und würde zu einer asymptotischen Annäherung an diesen neuen Wert führen, die nach zehn Schritten die Abweichung um 63 % reduziert hat, sollte zehnmal immer dieselbe neue Ankunftszeit erfasst worden sein. So ergibt sich ein neuer Wert, der als neuer Durchschnittswert angenommen werden kann, und somit sukzessive bei der nächsten Berechnung zugrunde gelegt werden kann. Insoweit aber Besonderheiten berücksichtigt werden, wie beispielsweise eine Baustelle, die, solange sie existiert, zu einer vorhersehbaren Umfahrung führt, die wiederum eine gut berechenbare Zeit in Anspruch nimmt, kann diese unmittelbar, also mit einem Gewichtungsfaktor von 1, aufaddiert werden.

Ganz ähnlich kann bei der Einzelladezustandsvorhersage und damit bei dem Vorhersagemodell vorgegangen werden. Auch dieses kann von einem anfänglichen Mittelwert ausgehen, oder alternativ von einem Erfahrungswert als Anfangswert und diesen dann bei stochastischen Abweichungen allmählich nachführen, oder bei eindeutig berechenbaren Abweichungen aufaddiert werden, bzw. natürlich abgezogen werden, je nach Vorzeichen.

Das jeweilige Modell bildet somit das Verhalten der vorherzusagenden Größe abhängig von den jeweils berücksichtigten Eingangsgrößen ab. Dadurch kann das Verhalten für die Vorhersage berücksichtigt werden. Besonders bildet das Vorhersagemodell für Ankunftszeiten das Verhalten der Ankunftszeiten in Abhängigkeit von den entsprechenden Eingangsgrößen ab, nämlich abhängig von den entsprechenden Informationen oder Zusatzinformationen. Gleiches gilt für das Vorhersagemodell für Einzelladezustände, das das Verhalten der Einzelladezustände in Abhängigkeit von den entsprechenden Eingangsgrößen abbildet, nämlich abhängig von den entsprechenden Informationen oder Zusatzinformationen. Diese beiden Modelle können in dem Vorhersagemodell für den Gesamtladezustand zusammengefasst sein.

Gemäß einem Aspekt wird vorgeschlagen, dass das Erstellen und/oder Verändern der Vorhersage der Ankunftszeiten mittels des Vorhersagemodells für Ankunftszeiten erfolgt. Das Vorhersagemodell berücksichtigt wenigstens eine Vorhersageinformation für Ankunftszeiten zum Erstellen einer Vorhersage der Ankunftszeiten als Modelleingang, und es berücksichtigt wenigstens eine Zusatzinformation für Ankunftszeiten zum Verändern einer Vorhersage der Ankunftszeiten als weitere Eingangsgröße. Insbesondere wird vorgeschlagen, dass wenigstens eine Zusatzinformation für Ankunftszeiten als Störgröße berücksichtigt wird.

Das Vorhersagemodell kann somit die Vorhersage insbesondere länger als einen Zyklus vorher durchführen, insbesondere länger als einen Tag vorher, nämlich basierend auf der wenigstens einen Vorhersageinformation für Ankunftszeiten und zusätzlich eine Anpassung der Vorhersage vornehmen, nämlich basierend auf der wenigstens einen Zusatzinformation. Damit können diese beiden Aspekte, also das Erstellen der Vorhersage der Ankunftszeiten und das Verändern bzw. Nachjustieren der Vorhersage der Ankunftszeiten in einem Vorhersagemodell vereint werden. Das Vorhersagemodell kann dabei gleichwohl mehrere Vorhersagen getrennt oder nacheinander ausgeben. So kann eine Vorhersage, die die Zusatzinformationen noch nicht verwendet, weil sie noch gar nicht vorliegen, zur Planung, nämlich zur langfristigen Planung über einen Tag hinaus, ausgegeben werden, besonders an einen Netzbetreiber oder Stromvermarkter. Zwischenzeitlich kann aber diese Vorhersage, wenn der kürzere Zeitraum angebrochen ist, nachjustiert werden und dann abermals ausgegeben werden, nämlich als angepasste Vorhersage. Diese Ausgabe kann nacheinander oder in zwei getrennten Ausgabekanälen erfolgen.

In diesem Sinne wird gemäß einem Aspekt vorgeschlagen, dass das Erstellen und/oder Verändern der Einzelladezustandsvorhersage mittels eines Vorhersagemodells für Einzelladezustände erfolgt, das wenigstens eine Vorhersageinformation für Einzelladezustände zum Erstellen einer Einzelladezustandsvorhersage als Modelleingang berücksichtigt, und das wenigstens eine Zusatzinformation für Einzelladezustände zum Verändern einer Ladezustandsvorhersage als weitere Eingangsgröße, insbesondere als Störgröße, berücksichtigt. Insoweit kann dieses Vorhersagemodell für Einzelladezustände genauso sinngemäß arbeiten wie das Vorhersagemodell für Ankunftszeiten, nämlich wie oben beschrieben.

Für beide Modelle gilt zudem, dass die jeweiligen Zusatzinformationen als Störgröße berücksichtigt werden. Somit kann die Umsetzung auch mittels eines regelungstechnischen Modells erfolgen, das die Vorhersageinformationen als Eingangsgrößen erhält und die Zusatzinformationen als Störgrößen. Für eine solche Regelstrecke bilden die Zusatzinformationen somit eine Störgröße, sie werden aber im Sinne einer Eingangsgröße in das Modell eingegeben.

Hier liegt besonders auch die Erkenntnis zugrunde, dass die Zusatzinformationen tatsächlich als Störgrößen wirken. Sie können nämlich unvorhergesehen und/oder stochastisch auftreten. Für jeweils einen betrachteten Fall mögen viele der Zusatzinformationen keine stochastischen Eigenschaften aufweisen, in der Gesamtheit, also über viele Tage, Monate oder sogar Jahre können sie aber stochastische Größen bilden. Deswegen wird hier die Berücksichtigung als Störgröße vorgeschlagen.

Ganz ähnlich wird gemäß einem Aspekt vorgeschlagen, dass das Erstellen und/oder Verändern der Gesamtladezustandsvorhersage mittels eines Vorhersagemodells für den Gesamtladezustand erfolgt, wobei das Vorhersagemodell für den Gesamtladezustand jeweils zu einem berücksichtigten Elektrofahrzeug wenigstens eine Vorhersageinformation für Ankunftszeiten und/oder für Einzelladezustände als Modelleingang berücksichtigt, und wenigstens eine Zusatzinformation für Ankunftszeiten und/oder für Einzelladezustände als weitere Eingangsgröße, insbesondere als Störgröße berücksichtigt. Somit können all diese Informationen in einem Gesamtmodell, nämlich dem Vorhersagemodell für den Gesamtladezustand, einfließen.

Außerdem oder alternativ wird vorgeschlagen, dass das Vorhersagemodell für den Gesamtladezustand jeweils zu einem berücksichtigten Elektrofahrzeug ein Vorhersagemodell für Ankunftszeiten und ein Vorhersagemodell für Einzelladezustände beinhaltet, zu einem neuen Modell kombiniert und/oder als kombiniertes Modell emuliert. Auf diese Art und Weise kann das Vorhersagemodell für den Gesamtladezustand auf einfache Art und Weise erstellt werden, nämlich, indem ein Vorhersagemodell für Ankunftszeiten und ein Vorhersagemodell für Einzelladezustände enthalten ist. Jeweils eines dieser Vorhersagemodelle kann pro Elektrofahrzeug vorgesehen sein. Es kann aber auch vorgesehen sein, dass dasselbe Modell jeweils für jedes Elektrofahrzeug benutzt wird, aber jeweils mit angepasstem Datensatz. Davon abgesehen kann eine Realisierung solcher Modelle in einem Prozessrechner erfolgen, sowohl für diese Modelle einzeln als auch für das Vorhersagemodell für den Gesamtladezustand insgesamt.

Gemäß einem Aspekt wird vorgeschlagen, dass das Erstellen der Vorhersage der Ankunftszeiten adaptiv verändert wird, indem jeweils eine Vorhersage der Ankunftszeit für den Vorhersagezeitraum mit einer tatsächlich in dem Vorhersagezeitraum aufgetretenen Ankunftszeit verglichen wird und in Abhängigkeit von dem Vergleich das zukünftige Erstellen der Vorhersage angepasst wird, wobei diese Adaption, nämlich Vergleich und davon abhängig Anpassung, wiederholt wird, insbesondere pro Zyklus, insbesondere täglich wiederholt wird.

Hier wurde erkannt, dass die Ankunftszeit basierend auf den verwendeten Informationen und Wahrscheinlichkeitsüberlegungen trotzdem noch Ungenauigkeiten aufweisen kann und somit wird eine zusätzliche Verbesserung der Vorhersage der Ankunftszeiten mittels der vorgeschlagenen Adaption erreicht. Besonders kann hier ein Adaptionsfaktor oder adaptiver Korrekturwert bestimmt werden, oder ein Vorhersagemodell in seiner Parametrierung angepasst werden.

Insbesondere kann eine Anpassung bzw. Adaption bei jeder Wiederholung verbessert werden. Besonders der Adaptionsfaktor oder der additive Korrekturwert, oder Parameter des Vorhersagemodells können, insbesondere asymptotisch, einem Idealwert angenähert werden. Das kann beispielsweise bei dem vorgeschlagenen additiven Korrekturwert wie folgt durchgeführt werden.

Bei dem Vergleich zwischen vorhergesagter Ankunftszeit und erfasster Ankunftszeit wird eine Differenz gebildet und diese Differenz wird mit einem Gewichtungsfaktor, der zwischen null und 1 liegt, multipliziert und das Ergebnis auf einen bestehenden additiven Korrekturwert aufaddiert. Als Anfangswert für diesen bestehenden additiven Korrekturwert kann der Wert null verwendet werden. Wird beispielsweise der Gewichtungsfaktor als 0,1 angesetzt, und sollte sich zwischen vorhergesagter Ankunftszeit und tatsächlicher Ankunftszeit, ohne Berücksichtigung des additiven Korrekturwertes, immer dieselbe Differenz ergeben, würde sich bei diesem Beispiel der Korrekturwert dieser Differenz asymptotisch annähern, wobei er sich bei dem beispielhaft genannten Gewichtungsfaktor von 0,1 dem Idealwert nach zehn Schritten um 63 % angenähert hätte.

In ähnlicher Weise kann auch bei anderen Parametern vorgegangen werden. Im Falle des Adaptionsfaktors kann beispielsweise der additive Korrekturwert in einen Adaptionsfaktor umgerechnet werden. Dafür kann die vorhergesagte Ankunftszeit zuzüglich des additiven Korrekturfaktors durch die vorhergesagte Ankunftszeit ohne diesen Korrekturfaktor geteilt werden. Es wird also ein Adaptionsfaktor herauskommen, der besonders im Bereich von 0,9 bis 1,1 liegt, was auch von der Zeitbasis der Ankunftszeit abhängt. Hierfür sollte eine Zeitbasis bestimmt werden, die einen Zeitpunkt null als Zeitbasis definiert, denn die Zeit hat, anders als ein Ladezustand, keinen natürlichen Anfangspunkt. Als Zeitbasis kann beispielsweise ein Zeitpunkt eine Stunde vor zu erwartender Ankunftszeit verwendet werden. Die erwartete Ankunftszeit wäre dann also eine Stunde bezogen auf diese Zeitbasis.

Allgemein kann jede adaptive Korrektur der Vorhersagen auf der Grundlage von erfassten Ankunftszeiten auf einer beliebigen Parametrisierung oder einem Modell beruhen, deren Parameter bzw. Freiheitsgrade mittels aufgezeichneten Beobachtungsdaten und vergangenen Prognosen optimiert werden.

Außerdem oder alternativ wird vorgeschlagen, dass das Erstellen der Einzelladezustandsvorhersage adaptiv verändert wird, indem jeweils eine Einzelladezustandsvorhersage für den Vorhersagezeitraum mit einem tatsächlich in dem Vorhersagezeitraum aufgetretenen Einzelladezustand verglichen wird und in Abhängigkeit von dem Vergleich das zukünftige Erstellen der Vorhersage angepasst wird, wobei diese Adaption, nämlich Vergleich und davon abhängig Anpassung, wiederholt wird, insbesondere pro Zyklus, insbesondere täglich wiederholt wird.

Hier kann somit sinngemäß wie bei der Adaption der Vorhersage der Ankunftszeiten vorgegangen werden. Lediglich braucht analog zur Zeitbasis keine Basis für den Einzelladezustand definiert zu werden, da ein Ladezustand tatsächlich einen absoluten Nullwert aufweist, nämlich die vollständige Entladung. Mit anderen Worten ist ein Ladezustand von 0 % eindeutig.

Somit werden hier auch dieselben Vorschläge wie zur Adaption der Vorhersage der Ankunftszeiten gemacht, insbesondere, dass ein Adaptionsfaktor oder additiver Korrekturwert für die Einzelladezustandsvorhersage erstellt werden kann, oder dass Parameter eines Vorhersagemodells für Einzelladezustände additiv angepasst werden.

Gemäß einem Aspekt wird vorgeschlagen, dass ein Vorhersagemodell für Ankunftszeiten als adaptives Modell ausgeführt ist, das in Abhängigkeit von einem Vergleich zwischen vorhergesagten Ankunftszeiten und dazu eingetretenen Ankunftszeiten einen oder mehrere Modellparameter anpasst. Wie schon beschrieben, kann hierdurch die Vorhersage verbessert werden.

Die Anpassung der Modellparameter kann beispielsweise so erfolgen, dass von dem Vergleich zwischen vorhergesagten Ankunftszeiten und eingetretenen Ankunftszeiten auf die Modellparameter zurückgerechnet wird, dass also beispielsweise ausgerechnet wird, wie die Modellparameter hätten eingestellt werden müssen, um jeweils statt der vorhergesagten Ankunftszeit die eingetretene Ankunftszeit zu erhalten. Dadurch ist ein Vergleich oder eine Differenz der Modellparameter gegenüber fingiert idealen Modellparametern ableitbar. Auf diese Weise kann dann jeweils für einen Modellparameter ein Adaptionsfaktor oder ein additiver Korrekturwert bestimmt werden, wie dies oben bereits in anderem Zusammenhang erläutert wurde. Alternativ kann ein Adaptionsfaktor oder ein additiver Korrekturwert für das Modell insgesamt bestimmt werden, der z.B. am Modellausgang implementiert ist.

Gleichermaßen wird als ein Aspekt vorgeschlagen, dass das Vorhersagemodell für Einzelladezustände als adaptives Modell ausgeführt ist, das in Abhängigkeit von einem Vergleich zwischen vorhergesagten Einzelladezuständen und dazu eingetretenen Einzelladezuständen einen oder mehrere Modellparameter anpasst. Hier kann sinngemäß wie bei dem adaptiven Vorhersagemodell für Ankunftszeiten vorgegangen werden.

Eine Adaption von Modellparametern kann auch dadurch erfolgen, dass die Modellparameter aus einem Ein-/Ausgangsverhalten des jeweiligen Modells basierend auf erfassten Ein-/Ausgangsgrößen identifiziert werden und eine Adaption der aktuellen Modellparameter zu den (neu) identifizierten Modellparametern durch eine Übergangsfunktion erfolgt. Im linearen Fall kann die Identifikation der Modellparameter mit einer Methode durchgeführt werden, die für die Modellparameter ein Gleichungssystem aufstellt und mit Hilfe Pseudo-Inversen löst.

Gemäß einem Aspekt wird vorgeschlagen, dass beim Erstellen der Gesamtladezustandsvorhersage und/oder beim Erstellen der Vorhersage der Ankunftszeiten und/oder beim Erstellen der Einzelladezustandsvorhersage jeweils eine Wahrscheinlichkeitsbewertung durchgeführt wird. Den jeweiligen Vorhersagen wird somit eine Wahrscheinlichkeitsbewertung zugeordnet, insbesondere eine Wahrscheinlichkeitsverteilung. Die Wahrscheinlichkeitsbewertung, insbesondere die Wahrscheinlichkeitsverteilung kann auch die Vorhersage als solche bilden. Diese Wahrscheinlichkeitsverteilung kann beispielsweise für die Ankunftszeit angeben werden und angeben, mit welcher Wahrscheinlichkeit das Elektrofahrzeug spätestens zu der vorhergesagten oder einer vorgegebenen Ankunftszeit ankommt. Der Wert kann beispielsweise 90 % betragen. Für eine spätere Ankunftszeit, zum Beispiel eine Viertelstunde später, besagt diese Wahrscheinlichkeitsbewertung, mit welcher Wahrscheinlichkeit das Elektrofahrzeug spätestens an dieser zweiten, also 15 Minuten später liegenden Ankunftszeit angekommen ist. Bei dieser Art der Bewertung muss dieser Wert bei dem genannten Beispiel logischerweise über 90 % liegen und kann beispielsweise 95 % betragen. Auf diese Art und Weise können viele Werte bestimmt werden und es ergibt sich eine Wahrscheinlichkeitsverteilung.

Ähnlich kann die Einzelladezustandsvorhersage bewertet werden, indem zu unterschiedlichen Einzelladezuständen ausgesagt wird, wie wahrscheinlich es ist, dass das Elektrofahrzeug wenigstens den jeweiligen Ladezustand aufweist. Bei 0 % ist dieser Wert logischerweise 1 und geht für 100 % gegen null. Hier kann der Moment zugrunde gelegt werden, wenn das Elektrofahrzeug sein Ladeterminal erreicht.

Auch für die Gesamtladezustandsvorhersage wird eine solche Wahrscheinlichkeitsbewertung, besonders Wahrscheinlichkeitsverteilung, vorgeschlagen. Die Gesamtladezustandsvorhersage ist dabei grundsätzlich etwas komplexer, da sie als zeitlicher Verlauf des Gesamtladezustands vorgesehen ist. Damit gibt es eine solche Wahrscheinlichkeitsbewertung für den Gesamtladezustand im Grunde für jeden Zeitpunkt des Vorhersagezeitraums. Hier kann vorzugsweise der zeitliche Verlauf des Gesamtladezustands einem vorbestimmten Wahrscheinlichkeitswert zugeordnet werden, insbesondere einem p-90, p-95, p-98 oder p-99 Wert.

Der p-99 Wert, Gleiches gilt sinngemäß für die übrigen genannten Werte, sagt aus, welchen Ladezustand der Gesamtladespeicher zu dem jeweiligen Zeitpunkt mit einer Wahrscheinlichkeit von 99 % wenigstens erreicht hat. Für denselben Zeitpunkt kann aufgrund einer Wahrscheinlichkeitsverteilung auch jeweils ein Ladezustandswert zu anderen Wahrscheinlichkeiten vorliegen. Hier wird aber vorzugsweise vorgeschlagen, dass für alle Zeitpunkte jeweils nur der Ladezustand zu einem bestimmten Wahrscheinlichkeitswert verwendet wird, also wie den beispielhaft genannten p-99 Wert. Der zeitliche Verlauf des Gesamtladezustands gibt dann also den zeitlichen Verlauf aller p-99 Werte wieder.

Gemäß einem Aspekt wird vorgeschlagen, dass für jedes Elektrofahrzeug eine Vorhersage der Ankunftszeit zusammen mit einer Wahrscheinlichkeitsbewertung, insbesondere mit einer Wahrscheinlichkeitsverteilung, und eine Einzelladezustandsvorhersage zusammen mit einer Wahrscheinlichkeitsbewertung, insbesondere mit einer Wahrscheinlichkeitsverteilung, erstellt und jeweils als Fahrzeugvorhersage zusammengefasst werden. Eine Fahrzeugvorhersage umfasst also eine Vorhersage der Ankunftszeit des Elektrofahrzeugs nebst Wahrscheinlichkeitsbewertung und eine Einzelladezustandsvorhersage desselben Elektrofahrzeugs nebst Wahrscheinlichkeitsbewertung.

Solche Fahrzeugvorhersagen werden somit für viele Fahrzeuge, insbesondere alle Fahrzeuge des Fuhrparks bzw. der Ladeinfrastruktur, erstellt und aus all diesen Fahrzeugvorhersagen wird die Gesamtladezustandsvorhersage zusammen mit einer Wahrscheinlichkeitsbewertung, insbesondere mit einer Wahrscheinlichkeitsverteilung, bestimmt.

Außerdem oder alternativ wird vorgeschlagen, dass aus allen Fahrzeugvorhersagen nebst Wahrscheinlichkeitsbewertung die Gesamtladezustandsvorhersage für einen vorbestimmten Wahrscheinlichkeitswert bestimmt wird. Hierdurch kann somit ein Verlauf einer Gesamtladezustandsvorhersage mit hoher Wahrscheinlichkeit angegeben werden und darauf basierend kann die Austauschleistung geplant werden. Insbesondere wird auch hier vorgeschlagen, diesen Verlauf der Gesamtladezustandsvorhersage für p-x-Werte anzugeben, besonders für einen p-90, p-95, p-98 oder p-99-Wert zu bestimmen und anzugeben. Diese p-90, p-95, p-98 oder p-99-Werte stehen dabei auch repräsentativ für ähnliche Werte.

Gemäß einem Aspekt wird vorgeschlagen, dass die Planung des Leistungsaustausches so erfolgt, dass zum Austausch mit dem elektrischen Versorgungsnetz eine Austauschleistung angeboten wird, wobei die Austauschleistung in Abhängigkeit von der Gesamtladezustandsvorhersage ermittelt wird. Als Austauschleistung wird hier besonders ein Austauschleistungsverlauf oder ein Austauschleistungsband angeboten und ermittelt. Die Gesamtzustandsvorhersage gibt einen zeitlichen Verlauf an und darauf basierend kann eine entsprechende Austauschleistung angeboten werden, nämlich so, dass aufgrund der Gesamtladezustandsvorhersage einschließlich eines gewünschten Ladezustands, der am Ende des Vorhersagezeitraums erreicht werden sollte, entsprechende Leistung angeboten werden kann.

Über die Vorgabe eines Austauschleistungsbandes können gegebenenfalls noch Schwankungen berücksichtigt werden. Hier liegt besonders der Gedanke zugrunde, dass Bedürfnisse oder Vorgaben des elektrischen Versorgungsnetzes berücksichtigt werden können, demnach zu manchen Zeiten eher ein Leistungsüberangebot und zu anderen Zeiten eher ein Leistungsbedarf besteht. Daran kann die Austauschleistung, besonders ein solcher Austauschleistungsverlauf oder ein solches Austauschleistungsband angepasst werden und entsprechend Leistung anbieten. Der Gesamtladezustandsverlauf, der vorhergesagt wurde, kann dafür eine wichtige Randbedingung bilden, dass nämlich der Leistungsaustausch so erfolgt, dass kein zu hoher oder zu niedriger Gesamtladezustand auftritt.

Erfindungsgemäß wird eine Ladeinfrastruktur vorgeschlagen, nämlich eine Ladeinfrastruktur, vorbereitet zum Planen eines Leistungsaustausches zwischen der Ladeinfrastruktur und einem elektrischen Versorgungsnetz, wobei
- die Ladeinfrastruktur mehrere Ladeterminals zum Anschließen und Laden von Elektrofahrzeugen aufweist, sodass die Elektrofahrzeuge über die Ladeterminals elektrische Leistung mit dem elektrischen Versorgungsnetz austauschen können,
- jedes Elektrofahrzeug einen elektrischen Speicher mit variablem Einzelladezustand aufweist, zum Aufnehmen und Abgeben elektrischer Leistung,
- alle an die Ladeinfrastruktur angeschlossenen Elektrospeicher einen Gesamtspeicher der Ladeinfrastruktur bilden, der durch eine Gesamtspeicherkapazität und einen Gesamtladezustand gekennzeichnet ist, wobei
   - die Gesamtspeicherkapazität variabel ist und
   - der Gesamtladezustand variabel ist, wobei
- die Ladeinfrastruktur dazu vorbereitet ist, insbesondere dazu eine Steuereinheit aufweist,
   - eine Vorhersage von Ankunftszeiten der Elektrofahrzeuge an ihren Ladeterminals zu erstellen, und
   - in Abhängigkeit von der Vorhersage der Ankunftszeiten eine Gesamtladezustandsvorhersage als Vorhersage des Gesamtladezustands für einen Vorhersagezeitraum zu erstellen, wobei
- sie dazu vorbereitet ist, die Gesamtladezustandsvorhersage als zeitlicher Verlauf des Gesamtladezustands zu erstellen und insbesondere ist sie dazu vorbereitet, dass
- die Gesamtladezustandsvorhersage in Abhängigkeit von Fahrplänen der Elektrofahrzeuge erstellt wird.

Die Ladeinfrastruktur ist somit dazu vorbereitet, zumindest ein Verfahren gemäß einer der vorstehend beschriebenen Ausführungsformen auszuführen. Dazu kann eine Steuereinheit vorgesehen sein, die beispielsweise als Prozessrechner ausgebildet ist und mit den Ladeterminals verbunden ist, um mit den Ladeterminals Informationen auszutauschen.

Das kann leitungsgebunden oder auch kabellos erfolgen. Insbesondere ist die Ladeinfrastruktur dadurch dazu vorbereitet, eines der Verfahren so auszuführen, dass entsprechende Programme in der Steuereinheit implementiert sind. Außerdem können Verbindungen zur Datenübertragung zu den Elektrofahrzeugen während der Fahrt bestehen, also insbesondere drahtlos. Zumindest ist vorgesehen, solche Datenverbindungen vorzusehen, über die die Steuereinheit Informationen von den Elektrofahrzeugen empfangen kann.

Die Erfindung wird nun nachfolgend unter Bezugnahme auf die begleitenden Figuren beispielhaft näher erläutert.
- Figur 1: zeigt ein Ablaufschema zum Veranschaulichen des vorgeschlagenen Verfahrens.
- Figur 2: zeigt einen Ausschnitt des Ablaufschemas der Figur 1 zur Veranschaulichung eines Ladezustandsbereichs und seiner Anwendung.
- Figur 3: zeigt einen Fuhrpark mit Ladeinfrastruktur schematisch.
- Figur 4: zeigt schematisch eine Struktur für eine Vorhersage eines Gesamtladezustands.
- Figur 5: zeigt schematisch und beispielhaft eine mögliche Struktur eines Vorhersageblocks gemäß Figur 4.
- Figur 6: zeigt schematisch und beispielhaft eine Möglichkeit eines Adaptionsblocks gemäß Figur 5.

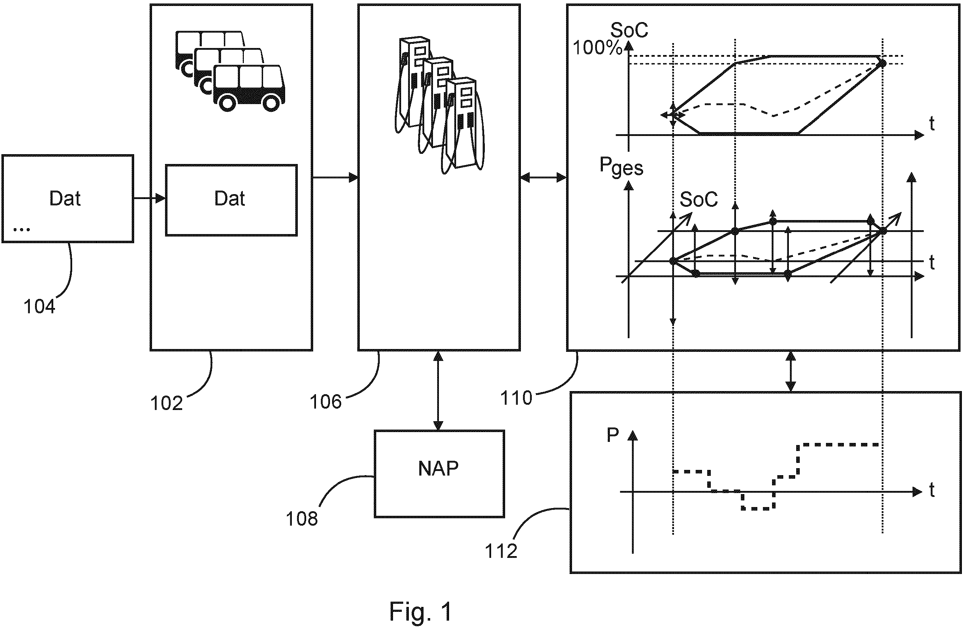

Das Ablaufschema der **Figur 1** soll den grundsätzlichen Ablauf des vorgeschlagenen Verfahrens erläutern. Ein Gedanke bei dem Verfahren ist es, Speicherkapazitäten eines Fuhrparks mit Elektrofahrzeugen auszunutzen, um damit bedarfsabhängig Leistung vorübergehend einem elektrischen Versorgungsnetz zur Verfügung zu stellen und auch das Entnehmen elektrischer Leistung aus dem Versorgungsnetz zum Laden der Speicher der Elektrofahrzeuge des Fuhrparks unter Berücksichtigung des elektrischen Versorgungsnetzes gezielt zu steuern. Mit dem Verfahren kann auch eine Strompreisoptimierung erreicht werden. Der Fuhrpark kann also so gesteuert werden, dass er den benötigten Ladestrom möglichst günstig bezieht und dabei die technischen Randbedingungen einhält. Besonders wurde erkannt, dass es dafür auf eine gute Planung der technischen Ressourcen ankommt, und die kann durch das vorgeschlagene Verfahren erreicht werden, besonders durch eine gute Vorhersage.

Der Fuhrpark der Elektrofahrzeuge wird durch den Fuhrparkblock 102 repräsentiert. Der Fuhrparkblock beinhaltet dabei Informationen zu den Elektrofahrzeugen. Diese Informationen beinhalten Informationen über die Speicher des jeweiligen Elektrofahrzeugs, nämlich detaillierte Information, also für jeden Speicher jedes Elektrofahrzeugs einzeln. Ebenso sind Informationen zu Ladezuständen der elektrischen Speicher enthalten, die der jeweilige Speicher aufweisen sollte, bevor das Elektrofahrzeug, besonders morgens, startet. Hier liegt auch besonders der Gedanke zugrunde, dass der Fuhrpark der Elektrofahrzeuge für vergleichsweise gut geplante Aufgaben eingesetzt wird, wie beispielsweise als Elektrobus eines Verkehrsbetriebs zum Durchführen eines öffentlichen Personennahverkehrs, um nur ein Beispiel zu nennen.

Entsprechend können in dem Fuhrparkblock 102 Informationen zu Abfahrtszeiten der jeweiligen Elektrofahrzeuge bekannt sein. Die Abfahrtszeiten bestimmen besonders, wann der Ladezustand des jeweiligen Speichers erreicht sein muss. Die Abfahrtszeit bestimmt aber auch, ab wann der Speicher des entsprechenden Elektrofahrzeugs nicht mehr ans elektrische Versorgungsnetz angeschlossen ist.

Der Fuhrparkblock kann aber auch Informationen darüber enthalten, welche maximale Ladeleistung oder maximale Entladeleistung jeder der Speicher jeweils hat. Diese genannten Informationen können in dem Fuhrparkblock 102 gespeichert sein, wobei sie auch aktualisiert werden können.

Darüber hinaus ist ein Eingangsdatenblock 104 veranschaulichend dargestellt. Dieser Eingangsdatenblock 104 beinhaltet besonders Informationen bzw. Daten, die stark veränderlich sind, insbesondere solche, die sich täglich ändern können und/oder täglich aktualisiert werden können. Dazu gehört ein Fahrplan für die Elektrofahrzeuge, wenn ein solcher vorhanden ist, der als Busfahrplan vorhanden sein kann, wenn die Elektrofahrzeuge des Fuhrparks Elektrobusse sind. Aber auch Wetterdaten, insbesondere eine Wettervorhersage, können durch diesen Eingangsdatenblock 104 bereitgestellt werden. Solche Daten werden in den Fuhrparkblock 102 eingegeben und können mit den in dem Fuhrparkblock 102 vorhandenen Daten zusammengeführt bzw. zusammen verrechnet werden. Dabei kann sich aus solchen Eingangsdaten wie dem Busfahrplan eine Zeit berechnen lassen oder zumindest abschätzen lassen, wann das jeweilige Elektrofahrzeug in dem Fuhrpark ankommt und dann zum Aufnehmen elektrischer Leistung aus dem elektrischen Versorgungsnetz, oder zum Abgeben elektrischer Leistung an das elektrische Versorgungsnetz bereitsteht.

Auch ein Ladezustand jedes Elektrospeichers zu dem Zeitpunkt, wenn das entsprechende Elektrofahrzeug am Fuhrpark ankommt, insbesondere, wenn es an die Ladeinfrastruktur angeschlossen wird, kann berechnet werden. Dazu können die Daten des Eingangsdatenblocks 104 verwendet werden und zusätzlich aus vorhanden Daten des Fuhrparkblocks 102 weitere Daten errechnet werden, wie insbesondere der Ladezustand oder zu erwartende Ladezustand des Elektrofahrzeugs, wenn es in dem Fuhrpark ankommt. Für diese Berechnung kann insbesondere eine Kenntnis über den Speicher, besonders wie groß er ist, verwendet werden. Diese Information wird dann aus dem Fuhrparkblock 102 genommen.

Auf diese Art und Weise wird vorgeschlagen, dass eine Prognose oder Vorhersage erstellt wird. Auch das kann in dem Fuhrparkblock 102 erfolgen. Es sei an dieser Stelle angemerkt, dass das Verfahren grundsätzlich auch anders umgesetzt werden kann, als dass unbedingt die erläuterten Blöcke verwendet werden, wie der Fuhrparkblock 102 und der Eingangsdatenblock 104. Diese Blöcke können beispielsweise auch anderweitig verknüpft sein, oder es können mehrere Eingangsschnittstellen vorhanden sein, um entsprechende Eingangsdaten zu empfangen. Beispielsweise kann es zweckmäßig sein, eine Wettervorhersage aus einer anderen Quelle zu erhalten als den Busfahrplan bzw. einen anderen Fahrplan. Insoweit dient das Ablaufschema der Figur 1 zur grundsätzlichen Erläuterung.

Die Prognose oder Vorhersage kann dann an eine Ladeinfrastruktur des Fuhrparks gegeben werden. Diese Ladeinfrastruktur wird durch den Infrastrukturblock 106 repräsentiert. Der Infrastrukturblock 106 kann dabei Informationen zur Ladeinfrastruktur enthalten, nämlich insbesondere eine maximale Ladeleistung, die durch entsprechende Ladeterminals vorgegeben sein kann. Diese Ladeterminals sind ebenfalls Teil der Ladeinfrastruktur. Auch eine Verfügbarkeit der Elektrospeicher kann in dem Infrastrukturblock 106 bekannt sein, besonders dadurch, dass die Ladeterminals jeweils die Information bereitstellen, ob an ihnen ein Elektrofahrzeug angeschlossen ist, gegebenenfalls auch was für eines bzw. was für ein Speicher.

Teilweise ergeben sich diese Daten auch aus den elektrischen Speichern und damit können die Daten gegebenenfalls von dem Fuhrparkblock 102 erhalten werden.

Der Infrastrukturblock 106 erhält außerdem die Vorhersagedaten, nämlich die jeweiligen Ankunftszeiten der Elektrofahrzeuge an den Ladeterminals und ebenfalls die einzelnen Ladezustände der Elektrofahrzeuge, sobald sie an den Ladestationen ankommen und angeschlossen werden. Diese Daten werden als Vorhersage übermittelt und weiter verarbeitet.

Außerdem ist ein Netzanschlussblock 108 vorgesehen, der besonders Informationen über das elektrische Versorgungsnetz und über verwendete Netzanschlusspunkte zur Verfügung stellen kann. Die Netzanschlusspunkte sind diejenigen, über die die Ladeterminals letztlich mit dem elektrischen Versorgungsnetz verbunden sind. Dabei kann die Ladeinfrastruktur über einen oder mehrere Netzanschlusspunkte mit dem elektrischen Versorgungsnetz verbunden sein.

Der Netzanschlussblock 108 kann Daten über eine maximale Einspeiseleistung, eine Sollspannung und eine Sollblindleistung bereitstellen. Die maximale Leistung, die auch als maximale Austauschleistung bezeichnet werden kann, ist diejenige Leistung, die maximal in das Netz eingespeist werden kann, oder die maximal aus dem elektrischen Versorgungsnetz entnommen werden kann. Die Sollspannung ist besonders eine Spannung des elektrischen Versorgungsnetzes an dem jeweiligen Netzanschlusspunkt. Eine Sollblindleistung kann eine Blindleistung sein, die von einem Netzbetreiber vorgegeben wird und/oder eine, die sich aus Daten des elektrischen Versorgungsnetzes ergibt. Darunter kann eine Höhe der einzuspeisenden Blindleistung fallen, die in Abhängigkeit von der aktuellen Netzspannung bestimmt werden kann.

All diese Daten können bereitgestellt werden, nämlich gemäß dem Ablaufschema der Figur 1 an den Infrastrukturblock 106. Aber auch hier muss nicht unbedingt eine solche Blockaufteilung erfolgen.

Der Netzanschlussblock 108 veranschaulicht zudem, dass sowohl die von den Elektrofahrzeugen bzw. ihren Speichern bereitstellbare Leistung, nämlich Wirkleistung, als auch eine bereitstellbare Blindleistung an den einen bzw. die mehreren Netzanschlusspunkte abgegeben wird, um darüber in das elektrische Versorgungsnetz eingespeist zu werden bzw. aus dem elektrischen Versorgungsnetz entnommen zu werden.

Aus diesen Daten kann, besonders in dem Infrastrukturblock 106, eine maximale Austauschleistung zum maximalen Austausch mit dem elektrischen Versorgungsnetz bestimmt bzw. aufgenommen werden. Es kann auch eine maximal verfügbare Wirkleistung bestimmt werden. Diese kann besonders von den Ladezuständen der Elektrofahrzeuge abhängen.

Gleiches gilt für die verfügbare Blindleistung, die zwar wenig Speicherkapazität der Elektrospeicher benötigt, aber dennoch zumindest ein wenig Speicherkapazität benötigt und zudem auch freie Kapazitäten zum Einspeisen entsprechenden Stromes in das elektrische Versorgungsnetz benötigt.

Zur Koordinierung der einzelnen Speicher der Elektrofahrzeuge des Fuhrparks, um dann aber eine gemeinsame Austauschleistung des Fuhrparks dem elektrischen Versorgungsnetz anbieten zu können, ist besonders eine Ladesteuereinheit vorgesehen, die auch als Aggregator bezeichnet werden kann bzw. einen Aggregator enthalten kann.

Mit den vorstehend erläuterten Informationen erstellt diese Ladesteuereinheit bzw. der Aggregator einen Ladezustandsbereich. Das wird in dem Aggregationsblock 110 veranschaulicht.

Durch den Aggregator, repräsentiert durch den Aggregationsblock 110, werden all diese Informationen, die vorstehend zu Figur 1 erläutert wurden, verwendet, um einen Ladezustandsbereich zu bestimmen. Besonders wird vorgeschlagen, eine Vorhersage für einen solchen Ladezustandsbereich zu bestimmen. Ein Ladezustandsbereich wird als Bereich oder Band über den Summenladezustand und die Zeit aufgespannt. Das ist im oberen Diagramm im Aggregationsblock 110 angedeutet. Dort ist der Summenladezustand an der Ordinate über die Zeit an der Abszisse aufgetragen. Der Ladezustandsbereich wird dabei durch eine Obergrenze und eine Untergrenze gebildet. In diesem Bereich, also zwischen dieser Obergrenze und der Untergrenze, verläuft der Summenladezustand.

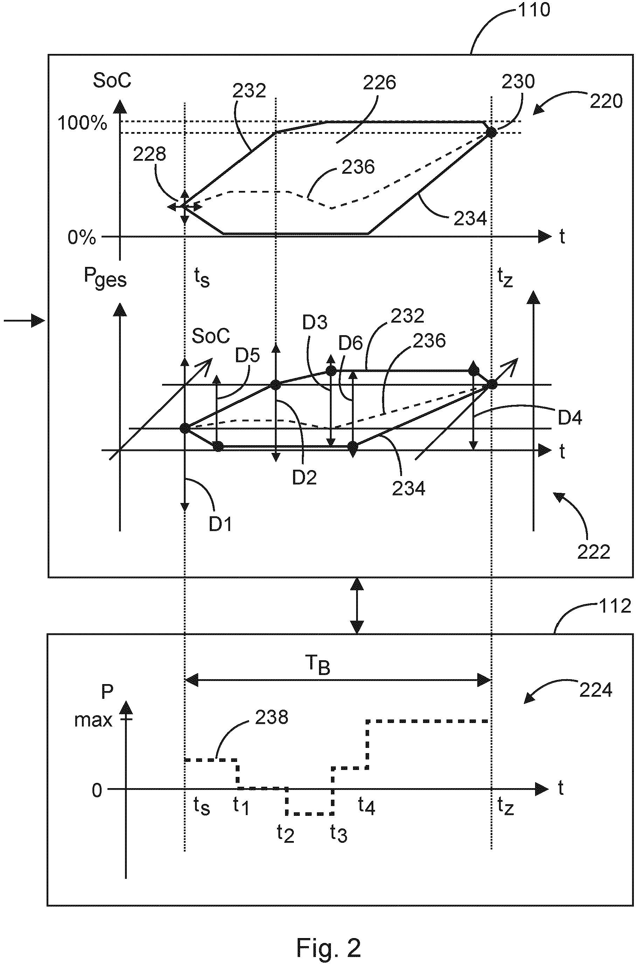

Details dazu sowie auch zu dem unteren Diagramm des Aggregationsblocks und auch zu dem unter dem Aggregationsblock 110 dargestellten Austauschleistungsblock 112 werden weiter unten zusammen mit der Figur 2 näher erläutert.

Jedenfalls kann der Aggregator, was durch das untere Diagramm im Aggregationsblock 110 veranschaulicht ist, zu unterschiedlichen Zeiten unterschiedliche Austauschleistungen und damit Austauschenergien vorgeben, was als dritte Dimension in dem Diagramm dargestellt werden kann. Solche möglichen Austauschleistungen oder Kontingente für Austauschleistungen können an den Austauschleistungsblock 112 übergeben werden. Ebenso kann der Austauschleistungsblock 112 basierend auf Verfügbarkeiten oder Angeboten im elektrischen Versorgungsnetz Austauschleistung zu unterschiedlichen Zeiten vorgeben und damit einen Verlauf der Austauschleistung vorgeben. Das ist in dem Diagramm des Austauschleistungsblocks 112 angedeutet, demnach zeitabhängig unterschiedliche Leistungsstufen vorgeschlagen werden. Der Verlauf der Austauschleistung muss allerdings nicht in Stufen verlaufen. Er könnte auch kontinuierlich verlaufen.

Eine solche Berechnung oder Vorgabe von Leistungspaketen oder -verläufen für die Austauschleistung kann in Abhängigkeit von dem Ladezustandsbereich und den Daten vorgenommen werden, die der Netzanschlussblock 108 bereitstellt bzw. die im Zusammenhang mit dem Netzanschlussblock 108 oben erläutert wurden.

Insoweit kann der Leistungsblock 112 bzw. der darin beispielhaft dargestellte Verlauf der Austauschleistung als Ergebnis oder zumindest Zwischenergebnis oder Teilergebnis des vorgeschlagenen Verfahrens verstanden werden. Aus den Daten über den Fuhrpark gemäß Fuhrparkblock 102, den Daten der Ladeinfrastruktur gemäß dem Infrastrukturblock 106, zusammen mit den Daten, die der Eingangsdatenblock 104 bereitstellt, kann ein Ladezustandsbereich bestimmt werden, insbesondere vorhergesagt werden.

Basierend auf diesem Ladezustandsbereich, der im oberen Diagramm des Aggregationsblocks 110 veranschaulicht ist, kann ein Verlauf der Austauschleistung über die Zeit bestimmt werden, vorzugsweise auch als Vorhersage. Dazu können besonders Daten über das elektrische Versorgungsnetz hinsichtlich Bedarf und Angebot verwendet werden, die aufzeigen, wann eine Austauschleistung in welcher Höhe vorteilhaft ist. Der Ladezustandsbereich bietet dafür einen Variationsbereich, der auch als Flexraum bezeichnet werden kann, und dadurch den Rahmen vorgibt, innerhalb dessen ein solcher Verlauf der Austauschleistung vorgegeben werden kann. Dabei wird die Austauschleistung so vorgegeben, dass der Summenladezustand in dem Ladezustandsbereich verbleibt.

**Figur 2** zeigt einen Ausschnitt des Ablaufschemas der Figur 1, nämlich den Aggregationsblock 110 und den Austauschleistungsblock112. Der Aggregationsblock 110 weist im oberen Bereich ein Ladezustandsdiagramm 220 auf, das einen Ladezustandsbereich illustriert. Im unteren Bereich des Aggregationsblocks 110 ist ein Variationsdiagramm 222 dargestellt, das auf dem Ladezustandsdiagramm 220 aufbaut und zusätzlich exemplarisch ein paar Variationsmöglichkeiten für Austauschleistung andeutet.

Im Austauschleistungsblock 112 ist ein Austauschleistungsdiagramm 224 dargestellt, das einen möglichen Verlauf einer Austauschleistung über die Zeit veranschaulicht also einen Austauschleistungsverlauf. Alle diese drei Diagramme, nämlich das Ladezustandsdiagramm 220, das Variationsdiagramm 222 und das Austauschleistungsdiagramm 224 weisen dieselbe Zeitachse auf. Besonders ist zur Veranschaulichung ein Startladezeitpunkt tₛ und ein Zielladezeitpunkt tz für den Ladezustandsbereich eingezeichnet und diese Zeitpunkte auch durch entsprechende senkrechte Linien in den übrigen beiden Diagrammen eingezeichnet. Der Startladezeitpunkt tₛ und der Zielladezeitpunkt tz spannen somit den Bereitstellungszeitraum T_{B} auf, der der besseren Übersichtlichkeit halber nur im Austauschleistungsblock 112 eingezeichnet ist. Je nach zeitlicher Betrachtungsweise ist der Bereitstellungszeitraum der Zeitraum in dem die Austauschleistung bereitgestellt werden soll. Das zeigt der Austauschleistungsblock 112. Um das zu planen, wird für den Bereitstellungszeitraum eine Vorhersage gemacht, sodass dann, wenn die Vorhersage gemacht wird, der Bereitstellungszeitraum der Vorhersagezeitraum ist. Der Bereitstellungszeitraum kann als fester wiederkehrender Zeitraum festgelegt werden, oder seine Anfangszeiten können selbst in Abhängigkeit von der Vorhersage schwanken. Der Startladezeitpunkt tₛ muss dann nicht der Anfangszeit des Bereitstellungszeitraumes entsprechen.

In dem Ladezustandsdiagramm 220 ist grundsätzlich der Summenladezustand SoC über die Zeit t aufgetragen. In diesem Diagramm ist der Ladezustandsbereich 226 dargestellt. Der Ladezustandsbereich 226 beginnt mit einem Startladepunkt 228 und endet mit einem Zielladepunkt 230. Der Startladepunkt 228 ist gekennzeichnet durch einen Wert des Summenladezustands SoC und den Startladezeitpunkt tₛ. Sowohl die Höhe des Summenladezustands als auch der Startladezeitpunkt tₛ können variieren und werden bevorzugt durch eine Vorhersage bestimmt, wie dies im Zusammenhang mit Figur 1 und dort besonders dem Fuhrparkblock 102 im Zusammenhang mit den Daten, die der Eingangsdatenblock 104 bereitstellt, erläutert wurde.

Von dem Startladepunkt 228 verläuft dann der Summenladezustand SoC zum Zielladepunkt 230. Der Zielladepunkt 230 ist durch den Zielladezeitpunkt tz gekennzeichnet und durch den zugehörigen Wert des Summenladezustands SoC.

Während der Startladezeitpunkt tₛ variabel ist und davon abhängt, wann die Elektrofahrzeuge tatsächlich zurück zum Fuhrpark gekommen sind, kann der Zielladezeitpunkttz recht genau festgelegt sein, nämlich dann, wenn die Elektrofahrzeuge planmäßig losfahren.

Auf welchem Verlauf der Summenladezustand SoC vom Startladepunkt 228 zum Zielladepunkt 230 geführt wird, ist vergleichsweise flexibel. Genau das wurde erkannt und dafür wird vorgeschlagen, lediglich Grenzen vorzugeben, die einen Flexraum aufspannen, die nämlich den Ladezustandsbereich 226 aufspannen. Der Ladezustandsbereich 226 weist dabei eine zeitabhängige Obergrenze 232 und eine zeitabhängige Untergrenze 234 auf. Die zeitabhängige Obergrenze 232 kann zeitweise den Wert von 100 % erreichen. Dann wären alle Elektrospeicher komplett vollgeladen. Außerdem kann die Untergrenze 234 zumindest zeitweise den unteren Wert von 0 % erreichen. Dies dient allerdings der Veranschaulichung und häufig ist es nicht ratsam, alle Speicher komplett zu entladen, weil sie dadurch Schaden nehmen können. Somit kann als Minimalwert der Untergrenze 234 auch ein anderer Wert als 0 % gewählt werden, beispielsweise 20 %. Gleiches gilt für die Obergrenze 232, für die ein Maximalwert beispielsweise statt bei 100 % bei 90 % gewählt werden kann. Dieser Minimalwert und dieser Maximalwert können auch in Abhängigkeit von entsprechenden Werten der einzelnen elektrischen Speicher gewählt werden.

Das Ladezustandsdiagramm 220 veranschaulicht somit, dass durch die Obergrenze 232 und die Untergrenze 234 ein Ladezustandsbereich 226 aufgespannt wird, in dem sich der Summenladezustand bewegen kann. Dazu ist beispielhaft ein Summenladezustandsverlauf 236 eingezeichnet. Der Summenladezustandsverlauf kann synonym auch als Gesamtladezustandsverlauf bezeichnet werden. Er gibt somit den zeitlichen Verlauf des Gesamtladezustands wieder. Der Gesamtladezustand kann synonym als Summenladezustand bezeichnet werden.

Im Übrigen ist dem Ladezustandsdiagramm 220 auch zu entnehmen, dass sich durch eine Variation des Startladepunktes 228 auch der Ladezustandsbereich 226 verändert, zumindest in seinem Anfangsbereich in der Nähe dieses Startladepunktes 228. Entsprechend hängt auch der Ladezustandsbereich 226 von der Vorhersage des Summenladezustands SoC zu Beginn des Ladezustandsbereichs 226 ab, und er hängt auch von der Vorhersage hinsichtlich des Startladezeitpunkts tₛ ab.

Das Variationsdiagramm 222 beinhaltet das Ladezustandsdiagramm 220, wobei die Koordinatenachse für den Summenladezustand SoC in die Zeichenebene hineinweist. Die Zeitachse ist geblieben und es ist eine Koordinatenachse für die Leistung P hinzugekommen. Diese Leistung P zeigt in dem Variationsdiagramm 222 an, bei welchem Eckpunkt der Obergrenze 232 bzw. Untergrenze 234 wie viel Austauschleistung abgegeben bzw. aufgenommen werden kann. Dazu sind die Doppelpfeile D1 - D6 eingezeichnet.

Der Doppelpfeil D1 betrifft den Startladepunkt 228 und zeigt an, dass in dem Moment sowohl positive als auch negative Austauschleistung in gleichem Maße angeboten werden kann. Der Doppelpfeil D2 ist an der Obergrenze 232 eingezeichnet und dort kann die Austauschleistung noch erhöht werden, insbesondere kann sie aber auch noch viel stärker mit negativem Wert angeboten werden. Beim Doppelpfeil D3, und Gleiches gilt für den Doppelpfeil D4, ist die Obergrenze 232 bei ihrem Maximalwert angekommen und dann kann nur noch negative Austauschleistung angeboten werden. Bei dem Doppelpfeil D4 kommt hinzu, dass negative Austauschleistung nicht nur angeboten werden kann, sondern angeboten werden muss, um den Zielladepunkt 230 noch zu erreichen. Allerdings kann der Zielladepunkt 230 auch als Mindestwert vorgegeben sein und dann könnte der Summenladezustand auch über diesem Zielladepunkt 230 liegen und dann würde der Doppelpfeil D4 auch nur eine mögliche negative Austauschleistung andeuten. Die Austauschleistung könnte auch null sein, sie kann aber nicht positiv sein, was der Doppelpfeil D4 anzeigt.

An dieser Stelle sei wiederholt, dass eine positive Austauschleistung eine solche ist, bei der die Speicher geladen werden, eine positive Austauschleistung ist also eine solche, bei der Leistung aus dem Netz entnommen und in die elektrischen Speicher eingespeichert wird.

Die Doppelpfeile D5 und D6 zeigen jeweils an, dass nur eine positive Austauschleistung möglich ist, weil hier die Untergrenze 234 bereits den minimalen Wert erreicht hat.

Insoweit zeigen diese Doppelpfeile D1 - D6 lediglich Möglichkeiten an und helfen, einen Rahmen zu definieren, in dem die Austauschleistung dann tatsächlich variiert werden kann.

Der Summenladezustandsverlauf 236 gibt somit eine Reihe vieler Summenladezustände an. Für jeden dieser Summenladezustände, also für jeden Punkt auf dem Summenladezustandsverlauf 236, kann ein Intervall bzw. ein minimaler und ein maximaler Wert vorgegeben werden. Für jeden Wert ergibt sich dann auch ein Trend für den Summenladezustand, der zu einem Verlauf durch den Ladezustandsbereich führt, der andere Austauschleistungen ermöglicht. Ständige Veränderungen können dabei zu einem kontinuierlichen Verlauf führen. Fährt aber ein Elektrofahrzeug ab oder kommt es an, so ändert sich der Summenladezustand sprunghaft.

Es ist nun beispielhaft ein Verlauf einer Austauschleistung, also ein Austauschleistungsverlauf 238 in dem Austauschleistungsdiagramm 224 des Austauschleistungsblocks 112 dargestellt. Demnach beginnt zum Startladezeitpunkt tₛ die Austauschleistung und damit der Austauschleistungsverlauf 238 mit einem positiven Wert. Es wird also Leistung aus dem elektrischen Versorgungsnetz entnommen und zum Laden der Speicher verwendet. Entsprechend steigt der Summenladezustand bzw. der Summenladezustandsverlauf 236 an. Das ist sowohl in dem Ladezustandsdiagramm 220 als auch dem Variationsdiagramm 222 zu erkennen. Zum Zeitpunkt t₁ fällt der Austauschleistungsverlauf 238 auf null ab und entsprechend weist der Summenladezustandsverlauf 236 einen waagerechten Bereich auf.

Zum Zeitpunkt t₂ ist geplant worden, also vorhergesagt worden, und wird dann noch umgesetzt, Leistung in das elektrische Versorgungsnetz einzuspeisen, weil hier ein besonders hoher Bedarf vorhergesagt wurde, der sich auch daraus ergeben kann, dass des nachts, wenn eigentlich wenig Leistung benötigt wird, ein großer Erzeuger abgeschaltet wird, sodass dennoch ein Leistungsbedarf im elektrischen Versorgungsnetz entstehen kann.

Diese negative Austauschleistung ab dem Zeitpunkt t₂ ist auch in dem Summenladezustandsverlauf 236 durch eine abfallende Flanke zu erkennen.

Zum Zeitpunkt t₃ wird die Austauschleistung wieder auf einen positiven Wert geändert und entsprechend steigt der Summenladezustand wieder an. Zum Zeitpunkt t₄ wird die Austauschleistung nochmals erhöht, sodass der Summenladezustandsverlauf 236 ab t₄ auch noch etwas steiler verläuft. Auf diese Weise werden dann schließlich alle Speicher voll geladen, wodurch der Summenladezustandsverlauf 236 den Zielladepunkt 230 erreicht.

Besonders wird vorgeschlagen, dass der Austauschleistungsverlauf 238, wie er beispielhaft in dem Austauschleistungsdiagramm 224 dargestellt ist, als Vorhersage vorherbestimmt wird. Der Netzbetreiber oder eine Netzsteuereinheit kann dann mit dieser Vorhersage arbeiten und das Netzmanagement entsprechend darauf einstellen.

Gleichwohl besteht besonders im Bereich von tₛ bis t₄ die Möglichkeit, *ad hoc* die Austauschleistung zu variieren, also den eigentlich vorgegebenen Austauschleistungsverlauf 238 zu verändern. Das kann beispielsweise dann geschehen, wenn unerwartet ein Leistungsbedarf oder auch ein Leistungsüberangebot im elektrischen Versorgungsnetz auftritt. Ein solches kann beispielsweise auch durch eine Veränderung der Netzfrequenz erkannt werden. So wird vorgeschlagen, dass dann, wenn die Netzfrequenz, die das elektrische Versorgungsnetz aufweist, einen vorbestimmten Grenzwert überschreitet, die Austauschleistung erhöht wird, also mehr Leistung aus dem Netz entnommen wird, und/oder dass in dem Fall, wenn die Netzfrequenz unter einen unteren Frequenzwert abfällt, die Austauschleistung verringert wird, also mehr Austauschleistung in das elektrische Versorgungsnetz eingespeist wird.

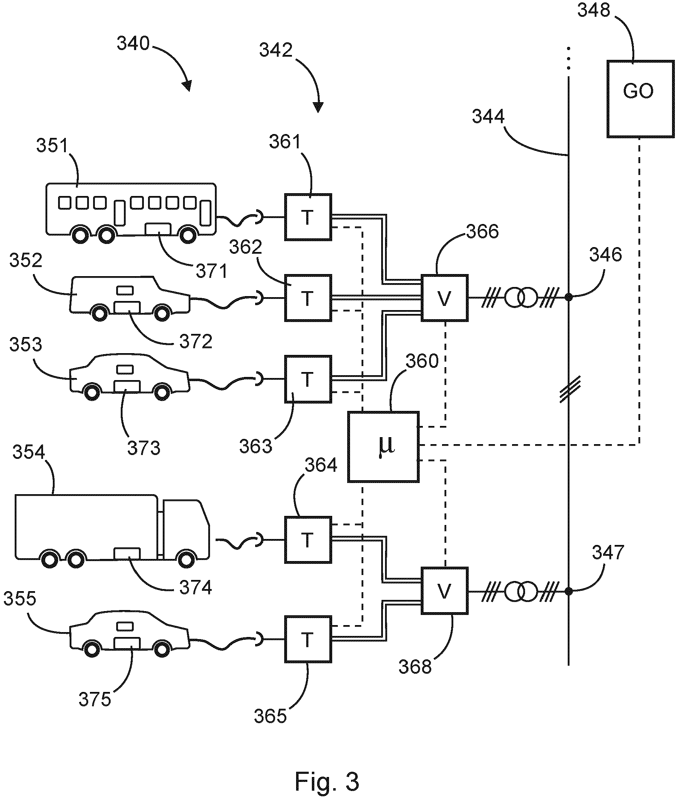

**Figur 3** zeigt einen Fuhrpark 340 mit einer Ladeinfrastruktur 342, die an ein elektrisches Versorgungsnetz 344 über zwei Netzanschlusspunkte 346 und 347 angeschlossen ist. Das elektrische Versorgungsnetz verfügt über eine Netzsteuereinheit 348, die das elektrische Versorgungnetz 344 steuern kann. Die Netzsteuereinheit 348 kann auch durch einen Netzbetreiber betrieben werden.

Der Fuhrpark 340 weist exemplarisch fünf Elektrofahrzeuge 351 - 355 auf, die jeweils an eines der Ladeterminals 361 - 365 angeschlossen sind. Die Ladeterminals können über Verteilerknoten 366 bzw. 368 über jeweils einen Netzanschlusspunkt 346 bzw. 347 mit dem elektrischen Versorgungsnetz 344 verbunden sein.

Somit können die drei Elektrofahrzeuge 351 - 353 über den Netzanschlusspunkt 346 in das elektrische Versorgungsnetz 344 einspeisen bzw. daraus Leistung entnehmen und die Elektrofahrzeuge 354 und 355 über den Netzanschlusspunkt 347 Leistung in das elektrische Versorgungsnetz 344 einspeisen oder daraus entnehmen.

Gleichwohl ist eine Ladesteuereinheit 360 vorgesehen, die jedes einzelne Ladeterminal 361 - 365 und damit jeden Speicher der Elektrofahrzeuge 351 - 355 ansteuern kann. Außerdem ist als optionale Möglichkeit vorgesehen, dass die Ladesteuereinheit auch die Verteilerknoten 366 und 368 ansteuern kann. Außerdem ist vorgesehen, dass die Ladesteuereinheit 360 mit der Netzsteuereinheit 348 kommunizieren kann. Die Ladesteuereinheit 360 kann dazu Informationen an die Netzsteuereinheit 348 geben sowie Informationen von ihr erhalten. Die Ladesteuereinheit 360 kann auch als Steuereinheit der Ladeinfrastruktur bezeichnet werden, oder Teil einer Steuereinheit sein.

Grundsätzlich sind die Informationsverbindungen zwischen der Ladesteuereinheit 360 einerseits und den Ladeterminals 361 - 365, den Verteilerknoten 366 und 368 sowie der Netzsteuereinheit 348 gestrichelt dargestellt. Über die übrigen Leitungen, die durchgezogen gezeichnet sind, ist eine Leistungs- bzw. Energieübertragung möglich.

Die Ladesteuereinheit 360 kann Informationen über Eigenschaften der Ladeinfrastruktur 342 gespeichert haben und/oder als aktuelle Daten empfangen. Außerdem kann sie Informationen über Eigenschaften der elektrischen Speicher der Elektrofahrzeuge 351 - 355 gespeichert haben und, insbesondere über die Ladeterminals 361 - 365, aktuelle Informationen über den Ladezustand und gegebenenfalls weitere Eigenschaften der jeweiligen Speicher der Elektrofahrzeuge 351 - 355 erhalten und verarbeiten.

Damit kann mit der Ladesteuereinheit 360 insgesamt die Austauschleistung gesteuert werden, die zwischen der Ladeinfrastruktur 342 und dem elektrischen Versorgungsnetz 344 ausgetauscht wird. Diese Austauschleistung ist insoweit die Summe der Teilaustauschleistungen, die über den Netzanschlusspunkt 346 und den Netzanschlusspunkt 347 mit dem elektrischen Versorgungsnetz 344 ausgetauscht werden.

In den Elektrofahrzeugen 351 - 355 sind zudem zum Zwecke der Veranschaulichung elektrische Speicher 371 - 375 angedeutet.

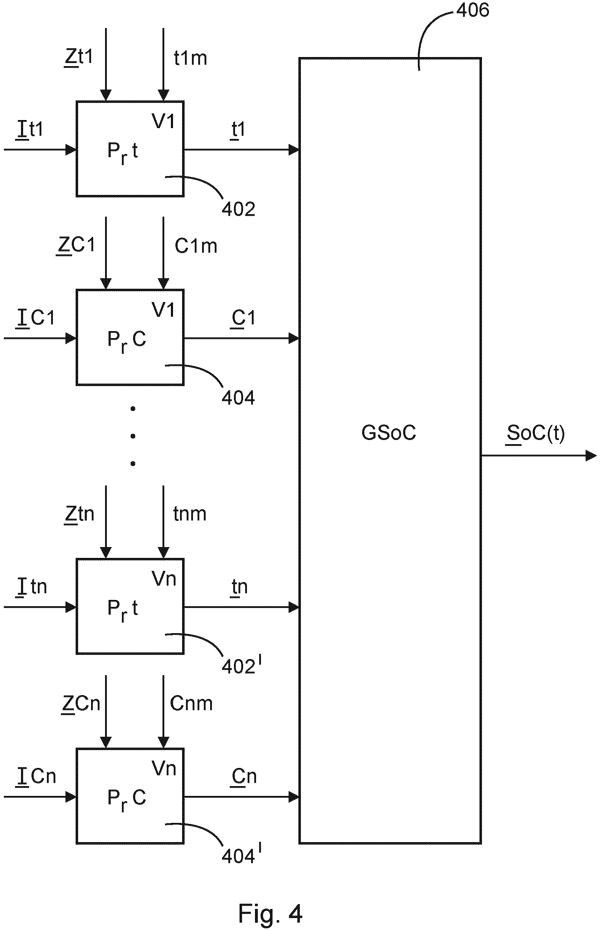

Die Struktur der **Figur 4** erläutert schematisch anhand von Funktionsblöcken, wie die Gesamtladezustandsvorhersage als zeitlicher Verlauf des Gesamtladezustands durchgeführt werden kann. Dazu veranschaulicht diese Struktur 400 der Figur 4 im Grunde ein Vorgehen in zwei grundsätzlichen Stufen. In der ersten Stufe, die der linke Teil der Figur 4 veranschaulicht, werden Vorhersagen für Ankunftszeiten der Elektrofahrzeuge sowie Vorhersagen der Einzelladezustände der Elektrofahrzeuge für jedes einzelne Elektrofahrzeug durchgeführt. All diese Einzelvorhersagen werden in einem im rechten Teil der Figur 4 veranschaulichten Schritt dann zu der Gesamtladezustandsvorhersage zusammengefasst.

Figur 4 geht verallgemeinernd von n Elektrofahrzeugen aus, die durch die Bezeichnung V1 - Vn in den entsprechenden Vorhersageblöcken angedeutet sind. Für jedes Elektrofahrzeug ist ein Vorhersageblock für Ankunftszeiten 402 bzw. 402' vorgesehen, sowie ein Vorhersageblock für Einzelladezustände 404 bzw. 404'. Zur besseren Übersichtlichkeit sind diese Blöcke jeweils nur für das erste Fahrzeug V1 und das n-te Fahrzeug Vn dargestellt. In dieser Darstellung wird für das erste Fahrzeug jeweils als Teil der Variablen die Zahl 1 für Eingangs- und Ausgangsgrößen verwendet, zu denen für das n-te Fahrzeug der Buchstabe n als Teil der Variablen verwendet wird. In diesem Sinne ist die Erläuterung der Blöcke für das erste Elektrofahrzeug auf die Blöcke des n-ten Fahrzeugs übertragbar, und auch auf alle nicht dargestellten Blöcke dazwischen.

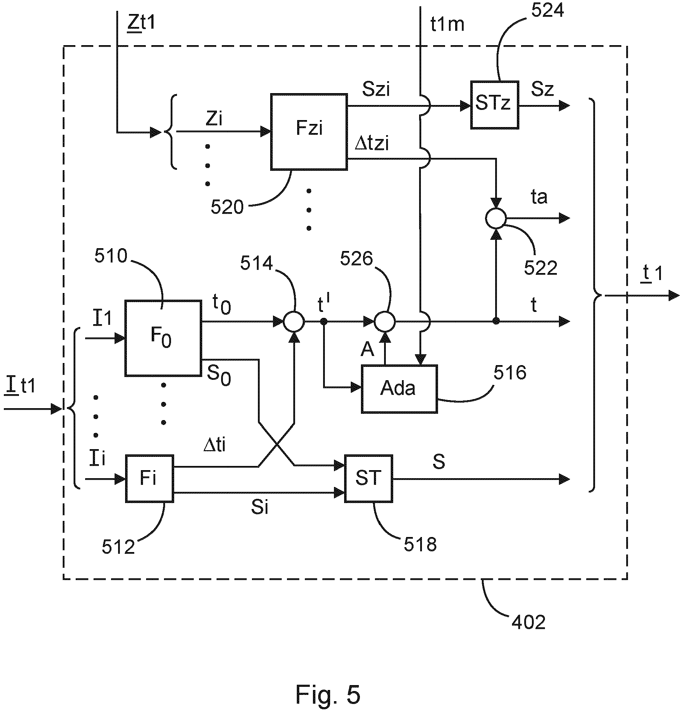

Somit ist für das erste Fahrzeug der Vorhersageblock 402 vorgesehen, der als Eingangsdaten Vorhersageinformationen It1 für Ankunftszeiten erhält. Die Unterstreichung macht deutlich, das gilt auch für alle übrigen Variablen der Figuren 4 und 5, dass diese Variable als Vektor ausgebildet sein kann und mehrere Einzelvariablen enthalten kann. Insbesondere enthält die Vorhersageinformation für Ankunftszeiten eine Information über einen Fahrplan des jeweiligen Elektrofahrzeugs.

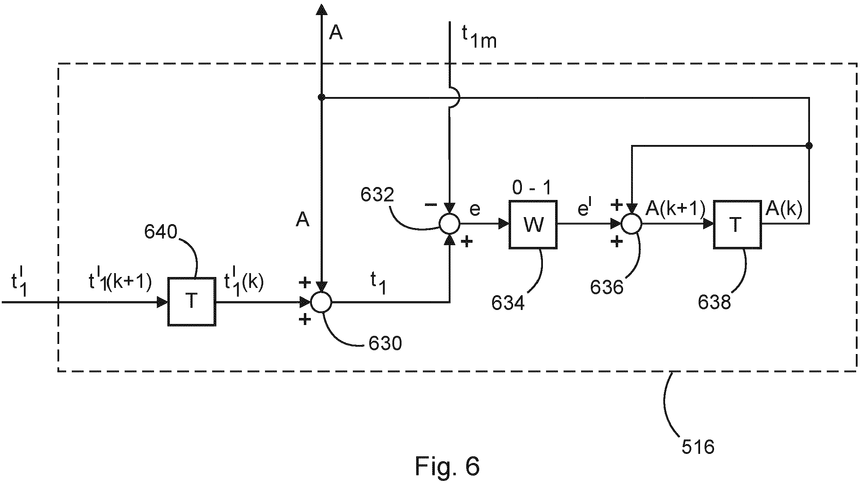

Außerdem bilden Zusatzinformationen Zt1 für Ankunftszeiten weitere Eingangsgrößen. Ebenfalls ist ein Messwert einer Ankunftszeit t1m vorgesehen. Diese Messung einer Ankunftszeit könnte auch Teil der Zusatzinformation oder der Vorhersageinformation sein, der besseren Übersichtlichkeit halber ist dieser Wert aber extra genannt und wird in den Figuren 5 und 6 auch noch näher hinsichtlich seiner Bedeutung erläutert werden.

Schließlich gibt der Vorhersageblock für Ankunftszeiten 402 somit als Ergebnis eine vorhergesagte Ankunftszeit t1 aus. Da aber weitere Informationen damit zusammen ausgegeben werden können, wie in Figur 5 noch erläutert wird, zeigt Figur 1 als Ausgangsgröße des Vorhersageblocks 402 den Vektor t1. Das wird durch die Unterstreichung angezeigt.

Ganz ähnlich erhält der Vorhersageblock für Einzelladezustände 404 Vorhersageinformationen für Einzelladezustände IC1, die insbesondere eine Information über einen Fahrplan des jeweiligen Elektrofahrzeugs enthalten, um darüber eine erste Einschätzung eines Einzelladezustands bei Ankunft zu erhalten.

Außerdem sind Zusatzinformationen ZC1 für Einzelladezustände als Eingangsgröße vorgesehen, sowie ein Messwert eines Einzelladezustands C1m. Der Buchstabe m soll andeuten, dass eine Messung vorliegt. Das gilt auch für die gemessene Ankunftszeit t1m.

Der Vorhersageblock für Einzelladezustände 404 gibt dann eine Vorhersage für den Einzelladezustand des betreffenden Elektrofahrzeugs aus, der als C1 bezeichnet werden kann und hier als C1 eingezeichnet ist, also mit Unterstreichung, um anzudeuten, dass weitere Werte enthalten sein können, nämlich insbesondere eine geänderte Vorhersage des Einzelladezustands sowie Wahrscheinlichkeitsbewertungen des Einzelladezustands.

Die Ausgangsgrößen jeweils eines Vorhersageblocks 402 für Ankunftszeiten und eines Vorhersageblocks 404 für Einzelladezustände eines Elektrofahrzeugs können als Fahrzeugvorhersage zusammengefasst werden. In diesem Sinne können auch die beiden Vorhersageblöcke 402 und 404 als ein Block zusammengefasst werden, der als Fahrzeugvorhersageblock bezeichnet werden könnte.

Jedenfalls werden die Ausgangsgrößen der Vorhersageblöcke 402 und 404 für jedes Elektrofahrzeug in den Gesamtvorhersageblock 406 eingegeben. In dem Gesamtvorhersageblock kann aus ihnen die Gesamtvorhersage bestimmt werden, nämlich die Gesamtladezustandsvorhersage als zeitlicher Verlauf des Gesamtladezustands. Das wird dort als SoC(t) ausgegeben. Die Variable t bezeichnet dort keine Ankunftszeit, sondern die Zeit als Variable in üblicher Art und Weise. Auch hier kann zusätzlich zu dem zeitlichen Verlauf auch ein angepasster zeitlicher Verlauf ausgegeben werden, der eine spätere Änderung des zeitlichen Verlaufs wiedergibt, sowie Wahrscheinlichkeitsbewertungen. Das soll durch die Unterstreichung angedeutet werden.

Das Zusammenführen all der Eingangswerte in den Gesamtvorhersageblock 406 kann besonders durch zeitliche Überlagerung erfolgen. Besonders zeitliche Verläufe der Einzelladezustände können zu dem Gesamtladezustand aufaddiert werden. Die Wahrscheinlichkeitsbewertungen können gemäß bekannten Überlegungen der Wahrscheinlichkeitstheorie zu einer entsprechenden Wahrscheinlichkeitsbewertung des Gesamtladezustands verwendet werden.

**Figur 5** stellt somit exemplarisch und schematisch den Vorhersageblock 402 der Figur 4 dar. Dieser Aufbau steht aber nicht nur repräsentativ für die übrigen Vorhersageblöcke für Ankunftszeiten, sondern sinngemäß auch für Vorhersageblöcke für Einzelladezustände.

Die Eingangsgrößen des Vorhersageblocks 402 sind somit im Zusammenhang mit Figur 4 vorstehend erläutert worden. Die Vorhersageinformation für Ankunftszeiten It1 wird dabei symbolisch in die einzelnen Werte, die darin enthalten sind, aufgeteilt. Dabei bildet der erste Wert I1 die Information über einen Fahrplan. Diese geht in einen Fahrplanblock 510 ein, der daraus eine Ankunftszeit t0 bestimmt. Im einfachsten Fall ist dieser Wert t0 in dem Fahrplan als Ankunftszeit enthalten und kann entsprechend übernommen werden. Sofern nichts Weiteres zu berücksichtigen ist, könnte das bereits das Ergebnis der Vorhersage der Ankunftszeit sein. Allerdings ist es eher unwahrscheinlich, dass die Ankunftszeit gemäß Fahrplan exakt eingehalten werden kann.

Entsprechend werden weitere Vorhersageinformationen berücksichtigt, für die Ii repräsentativ für diverse weitere Vorhersageinformationen steht. Jeweils eine solche Vorhersageinformation wird dann in einen Berechnungsblock 512 eingegeben und daraus wird jeweils eine Abweichungszeit bzw. Zeitabweichung Δti berechnet. Diese Abweichungszeit wird an der Summierstelle 514 auf die Basisankunftszeit t0 aufaddiert. Es kommt aber auch in Betracht, dass die Vorhersageinformationen, oder zumindest einige von ihnen zusammen ausgewertet werden, z.B. durch ein neuronales Netz, dass auf mehrere Vorhersageinformationen gemeinsam trainiert wird, um ein weiteres Beispiel zu erwähnen.

Das erfolgt für sämtliche Abweichungszeiten, die aus jeweiligen Informationen für Ankunftszeiten bestimmt wurden. Sie alle können an der Summierstelle 514 auf die Basisankunftszeit t0 aufaddiert werden. Das Ergebnis ist dann eine vorhergesagte vorläufige Ankunftszeit t'. Diese vorhergesagte vorläufige Ankunftszeit t' könnte bereits die von dem Vorhersageblock 402 auszugebende Ankunftszeit sein. Hier wird aber eine weitere Verbesserung mithilfe eines Adaptionsblocks 516 vorgeschlagen. Der Adaptionsblock 516 wird noch in Figur 6 erläutert und er gibt dann einen additiven Korrekturwert A aus, der an der Summierstelle 526 auf die vorläufige Ankunftszeit t' aufaddiert wird, so dass sich die vorhergesagte Ankunftszeit t ergibt, die dann natürlich als t1 für das erste Elektrofahrzeug auszugeben wäre.

Außerdem geben sowohl der Fahrplanblock 510 als auch die Berechnungsblöcke, für die der Berechnungsblock 512 repräsentativ steht, jeweils eine stochastische Bewertung bzw. eine Wahrscheinlichkeitsbewertung mit aus. Das ist dort als S0 bzw. Si angedeutet. Solche stochastischen Informationen können beispielsweise aufgrund von Erfahrungswerten wie über die Zeit aufgenommenen Schwankungen bestimmt werden. Beispielsweise können Werte der Ankunftszeit, die schwanken, ohne dass dafür eine der weiteren Vorhersageinformationen verantwortlich zu sein scheint, zur Wahrscheinlichkeitsbewertung herangezogen werden. Bei anderen Vorhersageinformationen können diese Wahrscheinlichkeitsbewertungen gegebenenfalls anderweitig bestimmt werden. Die Bestimmung mithilfe von Erfahrungswerten kommt aber grundsätzlich für alle Vorhersageinformationen und übrigens auch Zusatzinformationen in Betracht, sowohl für die Ankunftszeiten als auch für die Einzelladezustände. Das ist ein grundsätzlicher Gedanke und gilt für sämtliche Ausführungsformen. Auch Einflüsse der erläuterten Informationen, Zusatzinformationen oder Änderungsinformationen auf die Ankunftszeiten und/oder Einzelladezustände und/oder den Gesamtladezustand können aus Erfahrungswerten abgeleitet werden und in die Vorhersage einfließen. Auch das ist ein grundsätzlicher Gedanke und gilt für sämtliche Ausführungsformen.

Um aber ein weiteres Beispiel zu nennen, kann auch eine Wettervorhersage eine weitere Information sein und eine solche Wettervorhersage wird üblicherweise mit einer Wahrscheinlichkeitsbewertung versehen, die also mit überliefert wird. Die kann dann entsprechend in dem jeweiligen Berechnungsblock 512 berücksichtigt werden. In dem Stochastikblock 518 werden diese Wahrscheinlichkeitsbewertungen zusammengeführt und als Gesamtstatistikinformation bzw. als Gesamtwahrscheinlichkeitsbewertung S ebenfalls ausgegeben. Dieser Stochastikblock dient besonders der Veranschaulichung. Es kommt auch in Betracht, dass die Wahrscheinlichkeitsbewertungen jeweils mit ihren Vorhersageinformationen, also z.B. mit der Abweichungszeit, die aus einer Wettervorhersage bestimmt wurde, verknüpft bleiben. Δti und Si können also verknüpfte Werte bleiben. Es kommt dann auch eine Verknüpfung mit dem Adaptionsblock 516 in Betracht. Die Adaption kann bspw. von Wahrscheinlichkeitsinformationen profitieren und die Adaption kann die ausgegebenen Wahrscheinlichkeiten beeinflussen.

Weiterhin ist eine zusätzliche oder nachträgliche Änderung der vorhergesagten Ankunftszeit t vorgesehen. Dazu können die Zusatzinformationen für Ankunftszeiten Zt1 jeweils in einem Zusatzberechnungsblock 520 dem Grunde nach wie im Berechnungsblock 512 ausgewertet werden. Auch der Zusatzberechnungsblock 520 steht repräsentativ für viele solcher Zusatzberechnungsblöcke, nämlich jeweils einer für eine Zusatzinformation. Entsprechend ist in Figur 5 auch angedeutet, dass die Gesamtheit der Zusatzinformationen Zt1 aufgeschlüsselt wird in mehrere einzelne Zusatzinformationen Zi.

In einer anderen Ausgestaltung könnten die Zusatzinformationen direkt zusammen mit bzw. in Block 510 und 512 verarbeiten und somit in Block 514 geben werden. Die Adaption, für die hier repräsentativ der Adaptionsblock 516 steht, kann vorzugsweise als Prozess erst nach der Verarbeitung der Zusatzinformation ausgebildet sein. Zumindest wird in einer Variation vorgeschlagen, Gewichtungen in der Adaption bezogen auf die Zusatzinformationen zu setzen. Beispielsweise wir vorgeschlagen, dass dann, wenn t1m stark von t0 abweicht, weil z.B. ein Stau eingetreten ist, was einer der Zusatzinformationen zu entnehmen ist, bzw. als Zusatzinformation eingegeben wird, dann wird vorgeschlagen, eine solche Abweichung nicht zu stark zu gewichten. Von solchen singulären Ereignissen sollte die Adaption nicht zu stark beeinflusst werden und daher wird vorgeschlagen, dass die Adaption die Zusatzinformationen, zumindest einige davon, mit berücksichtigt, also abhängig von Zusatzinformationen arbeitet. Das wird generell vorgeschlagen nicht nur für die gezeigte Ausführungsform.

Das Ergebnis des Zusatzberechnungsblocks 520 ist somit eine weitere Abweichungszeit bzw. Zeitabweichung ΔtZi, nämlich für jede Zusatzinformation. Diese Zeitabweichung ΔtZi wird an der Summierstelle 522 zu der vorhergesagten Ankunftszeit t aufaddiert und es ergibt sich eine geänderte vorhergesagte Ankunftszeit ta.

Auch für die Zusatzinformationen und die daraus abgeleitete Änderung, nämlich die Abweichungszeiten ΔtZi wird eine Wahrscheinlichkeitsbewertung vorgenommen und die kann in dem Zusatzstochastikblock 524 zu der Zusatzwahrscheinlichkeitsbewertung Sz zusammengerechnet werden. Auch hier können alternativ die Wahrscheinlichkeitsbewertungen jeweils mit ihren Vorhersageinformationen verknüpft bleiben, sodass auch hier der Zusatzstochastikblock 524 im Wesentlichen der Erläuterung dient.

Schließlich werden die so berechneten Werte, nämlich die Zusatzwahrscheinlichkeitsbewertung Sz, die geänderte Vorhersage der Ankunftszeit ta, die vorhergesagte Ankunftszeit t und die Wahrscheinlichkeitsbewertung S zu dem Ausgabevektor t1 zusammengefasst und ausgegeben. Dieses Ergebnis kann dann, wie in Figur 4 erläutert, an den Gesamtvorhersageblock 406 übergeben werden.

Zur Verbesserung der vorhergesagten vorläufigen Ankunftszeit t' ist der Adaptionsblock 516 vorgesehen, der in **Figur 6** schematisch und im Übrigen auch nur beispielhaft, gezeigt ist. Demnach bildet die vorhergesagte vorläufige Ankunftszeit t1' den Eingang des Adaptionsblocks 516. Ihr wird, hinter dem Abtasthalteglied 640, in der Summierstelle 630 ein Korrekturwert A aufaddiert. Das Ergebnis ist dann die korrigierte, also endgültige vorhergesagte Ankunftszeit, die in diesem Adaptionsblock aber nur als Zwischengröße fungiert. Dieselbe Adaption findet aber in Figur 5 in der Summierstelle 514 statt. Dafür gibt der Adaptionsblock 516 den additiven Korrekturwert A aus.

Zur Durchführung der Adaption ist vorgesehen, dass diese korrigierte Ankunftszeit t1 mit einer tatsächlich gemessenen Ankunftszeit t1m verglichen wird. Die gemessene Ankunftszeit t1m ist dabei insbesondere in einem früheren Zyklus, insbesondere der neuesten Zyklen, gemessen worden, und/oder in einem früheren Durchgang, besonders am Vortag, oder zwei Tage vorher gemessen worden.

Der Vergleich wird so durchgeführt, dass in der Summierstelle 632 eine Differenz gebildet wird. Das Ergebnis ist somit eine Differenz im Sinne eines Regelfehlers e. Diese Differenz wird mit einem Gewichtungsfaktor gemäß dem Gewichtungsblock 634 multipliziert. Der Gewichtungsblock weist einen Faktor auf, nämlich einen Gewichtungsfaktor, der zwischen null und 1 liegen sollte. Exakt den Wert null sollte er nicht annehmen, weil dann logischerweise keine Berücksichtigung mehr erfolgt. Den Wert 1 könnte der Gewichtungsfaktor aber annehmen. Dann würde im Idealfall, nämlich in einem Schritt, die Adaption vollständig durchgeführt werden.

Da aber ohnehin grundsätzlich Schwankungen anzunehmen sind, sind eher geringere Werte sinnvoll, wie beispielsweise ein Wert von 0,1. Damit wird der Korrekturfaktor A im Grunde wie durch ein Verzögerungsglied erster Ordnung an einen Endkorrekturwert herangeführt. Jedenfalls ist das Ergebnis des Gewichtungsblocks 634 ein gewichteter Regelfehler e'. Dieser wird an der Summierstelle 636 auf den Korrekturwert des vorigen Durchgangs aufaddiert. Das Ergebnis ist somit der neue Korrekturwert A', der über das Halteglied 638 gegeben wird, um den aktuellen Korrekturfaktor A zu bilden. Der Korrekturfaktor A kann somit auch als A(k) und der neue Korrekturfaktor A' als A(k+1) bezeichnet werden.

Jedenfalls kann wie in Figur 6 erläutert eine Adaption durchgeführt werden. Die Struktur der Figur 6 ist dabei ein Beispiel für eine Adaption mittels additivem Korrekturwert, nämlich dem Korrekturwert A. Dieser Korrekturwert A behält somit seinen Wert auch dann, wenn der Idealzustand eintritt, nämlich, dass die vorhergesagte Ankunftszeit der gemessenen Ankunftszeit entspricht und der Regelfehler e somit null ist. Die Umsetzung dieser Adaption wird somit so durchgeführt, dass die Messung der Ankunftszeit t1m jeweils mit der vergangenen vorhergesagten zugehörigen Ankunftszeit verglichen wird. Mit anderen Worten liegt für die gemessene Ankunftszeit des vorigen Tages ebenfalls eine Vorhersage für diesen vorherigen Tag vor und diese beiden Zeiten werden verglichen. Der dabei ermittelte Korrekturwert A kann gleichwohl für die aktuelle Vorhersage verwendet werden, für die prinzipbedingt noch keine Messung vorliegt.

Entsprechend ist in Figur 6 das Halteglied 640 eingezeichnet, um zu verdeutlichen, dass für die Adaption nicht der aktuelle vorläufige Vorhersagewert t1' verwendet wird, sondern der vorherige Wert. Das ist aber schematisch zu verstehen und es kommt auch in Betracht, noch frühere Werte zu nehmen, nämlich angepasst an die zugehörigen Messwerte t1m. Entsprechend ist zur Veranschaulichung die Eingangsgröße des Halteglieds 640 als t1'(k+1) dargestellt und der Ausgangswert entsprechend als t1'(k) eingezeichnet. Die Haltezeit in dem Halteglied 640 kann entsprechend einen Tag oder auch mehrere Tage betragen, insbesondere 2 Tage betragen.

Eine Adaption der Modellparameter, besonders der Berechnungsblöcke 512 und der Zusatzberechnungsblöcke 520, gegebenenfalls aber sogar des Fahrplanblocks 510, kann in ähnlicher Weise erfolgen. Bei einer solchen Modelladaption werden aber nicht die Ausgangsgrößen oder Zustände adaptiert, sondern Parameter, also insbesondere Faktoren.

Für eine solche Adaption kann so vorgegangen werden, dass in dem entsprechenden zu adaptierenden Modell der eine Parameter verändert oder die mehreren Parameter beispielsweise gleichförmig oder nach einem anderen Zusammenhang verändert werden, bis der Ausgang der Vergleichsmessung entspricht. Die Parameter, die sich dann eingestellt haben, können mit den Parametern, die vor der Veränderung vorgelegen haben, verglichen werden. Es kann jeweils eine Differenz gebildet werden und mit dieser Differenz kann sinngemäß wie mit dem Regelfehler e am Ausgang der Summierstelle 632 der Figur 6 verfahren werden. Die Abweichung wird also mit einem Gewichtungsfaktor zwischen null und 1 multipliziert und das Ergebnis auf einen früheren Korrekturwert, der hier ein Korrekturfaktor sein kann, aufaddiert und diese Summe über ein Halteglied gegeben, um dann für den nächsten Verlauf wieder zur Addition an der Summierstelle 636 zur Verfügung zu stehen. Beim nächsten Verlauf wird der Vorgang wiederholt, wobei wieder mit der Veränderung der Parameter, die somit Modellparameter bilden, begonnen wird.

Alternativ kann eine Adaption für die Vorhersage auch so vorgenommen werden, wie sie aus der Regelungstechnik zur Adaption eines Reglers bekannt ist. Es würde hier dann also statt des Reglers das Vorhersagemodell adaptiert werden. Hier kommt besonders das Self-Tuning-Verfahren in Betracht, bei dem aus der Beobachtung von Ein- und Ausgangsgrößen das System und damit auch seine Veränderungen identifiziert werden. Aus den so identifizierten Änderungen lässt sich dann das Modell entsprechend anpassen. In dem Sinne sind die Vorhersageinformationen und die Zusatzinformationen, die jeweils berücksichtigt werden, die Eingangsgrößen und die vorhergesagte Ankunftszeit bzw. bei der Einzelladezustandsvorhersage der vorhergesagte Einzelladezustand, die Ausgangsgröße, und das jeweilige Modell für die Bestimmung der jeweiligen Ankunftszeit bzw. des jeweiligen Einzelladezustands können in dem Sinne als System angesehen werden.

Es wurde auch als Ziel der Erfindung die Aufgabe gestellt, sowohl den Zeitpunkt als auch den Ladezustand inkl. der Wahrscheinlichkeitsverteilung möglichst gut zu prognostizieren.

Es wurde erkannt, dass alternativ auch ein Ladeenergiebedarf und ein Ladezeitraum, besonders mit variabler Startzeit und fester Endzeit, prognostiziert werden kann.

Es wurde erkannt, dass solche Prognosen bei der Aggregation mobiler Speicher zu einer gemeinsamen Speicherkapazität, die als Flexibilitätsraum bereitgestellt werden kann, benötigt werden können.

Besonders geht es um eine Informationsbereitstellung für eine Aggregierung zu einem hochverfügbaren Speicherverbund.

Die Erfindung hat sich auch als Aufgabe gesetzt, Wahrscheinlichkeitsabhängige Ladezustands- (SoC-) und Ankunftsprognosen für E-Mobility Anwendungen im Linienbetrieb, besonders für Bus und Logistik zu schaffen und zu verwenden. Es kommen auch Anwendungen im Car- oder Bikesharing in Betracht.

Die Idee fokussiert sich auf eine Prognose der Ankunftszeit (inkl. Wahrscheinlichkeitsverteilung) und dem Ladezustand (inklusive Wahrscheinlichkeitsverteilung) eines Fahrzeuges an einen Ladepunkt. Diese wird bei der Aggregation (siehe Figuren, besonders Figuren 2 und 3) benötigt. Dadurch kann ein sehr großer Anteil der Batteriekapazität mit einer hohen Verfügbarkeit für globale und lokale Systemdienstleistungen und/oder Stromarbitragegeschäft genutzt werden. Die Prognosen werden dabei im Voraus, insbesondere einen Tag vorher erstellt, nämlich vor initialer Ladeenergiebeschaffung, und können dynamisch aktualisiert werden.

## Patentansprüche

1. Verfahren zum Planen eines Leistungsaustausches zwischen einer Ladeinfrastruktur (342) und einem elektrischen Versorgungsnetz (344), wobei
- die Ladeinfrastruktur (342) mehrere Ladeterminals (361-365) zum Anschließen und Laden von Elektrofahrzeugen (351-355) aufweist, sodass die Elektrofahrzeuge (351-355) über die Ladeterminals (361-365) elektrische Leistung mit dem elektrischen Versorgungsnetz (344) austauschen können,
- jedes Elektrofahrzeug (351-355) einen elektrischen Speicher (371-375) mit variablem Einzelladezustand aufweist, zum Aufnehmen und Abgeben elektrischer Leistung,
- alle an die Ladeinfrastruktur (342) angeschlossenen Elektrospeicher einen Gesamtspeicher der Ladeinfrastruktur (342) bilden, der durch eine Gesamtspeicherkapazität und einen Gesamtladezustand (236) gekennzeichnet ist, wobei
- die Gesamtspeicherkapazität variabel ist und
- der Gesamtladezustand (236) variabel ist, wobei
- eine Vorhersage von Ankunftszeiten (t1, tn) der Elektrofahrzeuge (351-355) an ihren Ladeterminals (361-365) erstellt wird, und
- in Abhängigkeit von der Vorhersage der Ankunftszeiten (t1, tn) eine Gesamtladezustandsvorhersage als Vorhersage des Gesamtladezustands (236) für einen Vorhersagezeitraum erstellt wird, wobei
- die Gesamtladezustandsvorhersage als zeitlicher Verlauf des Gesamtladezustands (236) erstellt wird, und insbesondere
- die Gesamtladezustandsvorhersage in Abhängigkeit von Fahrplänen der Elektrofahrzeuge erstellt wird.

2. Verfahren nach Anspruch 1, **dadurch gekennzeichnet, dass** die Gesamtladezustandsvorhersage wenigstens einen Tag vor Beginn des Vorhersagezeitraumes (T_{B}) erstellt wird.

3. Verfahren nach Anspruch 1 oder 2, **dadurch gekennzeichnet, dass**
- für jeden Einzelladezustand eine Einzelladezustandsvorhersage erstellt wird, insbesondere als zeitlicher Verlauf des Einzelladezustands, und
- die Gesamtladezustandsvorhersage zusätzlich in Abhängigkeit von den Einzelladezustandsvorhersagen erstellt wird.

4. Verfahren nach einem der vorstehenden Ansprüche, **dadurch gekennzeichnet, dass**
die Vorhersage der Ankunftszeiten in Abhängigkeit von wenigstens einer Vorhersageinformation für Ankunftszeiten (It1) erstellt wird, aus der Liste aufweisend
- Information über einen Fahrplan des jeweiligen Elektrofahrzeugs (351-355), der geplante Fahrzeiten und optional geplante Fahrstrecken aufweist,
- aktuelle Verkehrsinfrastrukturinformation eines für das jeweilige Elektrofahrzeug relevanten Bereichs,
- für das jeweilige Elektrofahrzeug abgespeicherte Ankunftszeiten vergangener Tage,
- eine Wettervorhersage,
- Information über Ereignisse, die das Verkehrsaufkommen des für das jeweilige Elektrofahrzeug relevanten Bereichs beeinflussen, und
- Information jeweils über einen Fahrer des jeweiligen Elektrofahrzeugs (351-355) und/oder über ein Fahrverhalten des jeweiligen Elektrofahrzeugs (351-355).

5. Verfahren nach einem der vorstehenden Ansprüche, **dadurch gekennzeichnet, dass**
eine bzw. die Einzelladezustandsvorhersage in Abhängigkeit von wenigstens einer Vorhersageinformation für Einzelladezustände (IC1) erstellt wird, aus der Liste aufweisend
- Information über einen Fahrplan des jeweiligen Elektrofahrzeugs (351-355), der geplante Fahrzeiten und optional geplante Fahrstrecken aufweist,
- Information über Eigenschaften des Elektrofahrzeugs, insbesondere Eigenschaften des Speichers des Elektrofahrzeugs,
- Information über für das jeweilige Elektrofahrzeug abgespeicherte Einzelladezustände bei Ankunft an dem Ladeterminal gemäß einer Erfassung vergangener Tage,
- Information über einen vorgebbaren Einzelladezustand des jeweiligen Elektrofahrzeugs (351-355) zu Beginn einer Fahrt, wenn das Elektrofahrzeug von seinem Ladeterminal getrennt wird,
- aktuelle Verkehrsinfrastrukturinformation eines für das jeweilige Elektrofahrzeug relevanten Bereichs,
- eine Wettervorhersage,
- Information über Ereignisse, die das Verkehrsaufkommen des für das jeweilige Elektrofahrzeug relevanten Bereichs beeinflussen,
- Information jeweils über einen Fahrer des jeweiligen Elektrofahrzeugs (351-355) und/oder über ein Fahrverhalten des jeweiligen Elektrofahrzeugs (351-355),
- Information über einen Zustand des Elektrofahrzeugs (351-355), insbesondere einen Zustand des Speichers des Elektrofahrzeugs (351-355) und
- Information über eine Modellungenauigkeit oder Fehler einer Erfassung eines Einzelladezustands.

6. Verfahren nach einem der vorstehenden Ansprüche, **dadurch gekennzeichnet, dass**
- die Gesamtladezustandsvorhersage, nachdem sie erstellt wurde, in Abhängigkeit von
wenigstens einer Änderungsinformation verändert wird, insbesondere dadurch, dass die Gesamtladezustandsvorhersage
- in Abhängigkeit von einer Änderung der Vorhersage der Ankunftszeiten und/oder
- in Abhängigkeit von einer Änderung einer bzw. der Einzelladezustandsvorhersage
verändert wird.

7. Verfahren nach einem der vorstehenden Ansprüche, **dadurch gekennzeichnet, dass**
- die Vorhersage der Ankunftszeiten, nachdem sie erstellt wurde, in Abhängigkeit von wenigstens einer Zusatzinformation für Ankunftszeiten (Zt1) verändert wird, ausgewählt aus der Liste aufweisend
- Information darüber, dass ein bzw. der Fahrplan geändert wurde, insbesondere manuell geändert wurde,
- Information über eine erfasste Verkehrssituation und/oder über eine kurzfristige Vorhersage einer Verkehrssituation,
- Information zum aktuellen Wetter oder eine kurzfristige Wettervorhersage, die für den Vorhersageraum erstellt wurde, nachdem die Gesamtladezustandsvorhersage erstellt wurde,
- Information über eine Abweichung einer aktuellen Position eines Elektrofahrzeugs von einer geplanten Position gemäß einem bzw. dem Fahrplan
- Information über eine Beladung oder durchschnittliche Personenbesetzung des Elektrofahrzeugs.

8. Verfahren nach einem der vorstehenden Ansprüche, **dadurch gekennzeichnet, dass**
- die Einzelladezustandsvorhersage, nachdem sie erstellt wurde, in Abhängigkeit von wenigstens einer Zusatzinformation für Einzelladezustände (ZC1) verändert wird, ausgewählt aus der Liste aufweisend
- Information über eine erfasste Verkehrssituation und/oder eine kurzfristige Vorhersage einer Verkehrssituation,
- Information zum aktuellen Wetter oder eine kurzfristige Wettervorhersage, die für den Vorhersageraum erstellt wurde, nachdem die Gesamtladezustandsvorhersage erstellt wurde,
- Information über eine Abweichung einer aktuellen Position eines Elektrofahrzeugs von einer geplanten Position gemäß einem bzw. dem Fahrplan,
- Information über eine Ladung oder durchschnittliche Personenbesetzung des Elektrofahrzeugs,
- Information über einen Einzelladezustand des Elektrofahrzeugs, insbesondere zusammen mit einem zugeordneten Zeitpunkt und/oder einer zugeordneten Position.

9. Verfahren nach einem der vorstehenden Ansprüche, **dadurch gekennzeichnet, dass**
- das Erstellen und/oder Verändern
- der Vorhersage der Ankunftszeiten,
- der Einzelladezustandsvorhersage und/oder
- der Gesamtladezustandsvorhersage
mittels
- eines Vorhersagemodells für Ankunftszeiten,
- eines Vorhersagemodells für Einzelladezustände bzw.
- eines Vorhersagemodells für den Gesamtladezustand (236) erfolgt.

10. Verfahren nach einem der vorstehenden Ansprüche, **dadurch gekennzeichnet, dass**
- das Erstellen und/oder Verändern der Vorhersage der Ankunftszeiten mittels eines Vorhersagemodells für Ankunftszeiten erfolgt, das
- wenigstens eine Vorhersageinformation für Ankunftszeiten bzw. eine der Vorhersageinformationen für Ankunftszeiten zum Erstellen einer Vorhersage der Ankunftszeiten als Modelleingang berücksichtigt, und
- wenigstens eine Zusatzinformation für Ankunftszeiten (Zt1) bzw. eine der Zusatzinformationen für Ankunftszeiten zum Verändern einer Vorhersage der Ankunftszeiten als weitere Eingangsgröße, insbesondere als Störgröße berücksichtigt, und/oder dass
- das Erstellen und/oder Verändern der Einzelladezustandsvorhersage mittels eines Vorhersagemodells für Einzelladezustände erfolgt, das
- wenigstens eine Vorhersageinformation für Einzelladezustände bzw. eine der Vorhersageinformationen für Einzelladezustände zum Erstellen einer Einzelladezustandsvorhersage als Modelleingang berücksichtigt, und
- wenigstens eine Zusatzinformation für Einzelladezustände (ZC1) bzw. eine der Zusatzinformationen für die Einzelladezustände zum Verändern einer Ladezustandsvorhersage als weitere Eingangsgröße, insbesondere als Störgröße berücksichtigt, und/oder
- das Erstellen und/oder Verändern der Gesamtladezustandsvorhersage mittels eines Vorhersagemodells für den Gesamtladezustand (236) erfolgt, das
- jeweils zu einem berücksichtigten Elektrofahrzeug
- wenigstens eine Vorhersageinformation bzw. eine der Vorhersageinformationen für Ankunftszeiten und/oder für Einzelladezustände als Modelleingang berücksichtigt, und
- wenigstens eine Zusatzinformation bzw. eine der Zusatzinformationen für Ankunftszeiten (Zt1) und/oder für Einzelladezustände (ZC1) als weitere Eingangsgröße, insbesondere als Störgröße berücksichtigt, und/oder dass
- das Vorhersagemodell für den Gesamtladezustand (236) jeweils zu einem berücksichtigten Elektrofahrzeug
- ein Vorhersagemodell für Ankunftszeiten und
- ein Vorhersagemodell für Einzelladezustände beinhaltet, zu einem neuen Modell kombiniert und/oder als kombiniertes Modell emuliert.

11. Verfahren nach einem der vorstehenden Ansprüche, **dadurch gekennzeichnet, dass**
das Erstellen der Vorhersage der Ankunftszeiten adaptiv verändert wird, indem jeweils eine Vorhersage der Ankunftszeit für den Vorhersagezeitraum mit einer tatsächlich in dem Vorhersagezeitraum aufgetretenen Ankunftszeit verglichen wird und in Abhängigkeit von dem Vergleich das zukünftige Erstellen der Vorhersage angepasst wird, wobei diese Adaption, nämlich Vergleich und davon abhängig Anpassung, wiederholt wird, insbesondere täglich wiederholt wird, und/oder
das Erstellen der Einzelladezustandsvorhersage adaptiv verändert wird, indem jeweils eine Einzelladezustandsvorhersage für den Vorhersagezeitraum mit einem tatsächlich in dem Vorhersagezeitraum aufgetretenen Einzelladezustand verglichen wird und in Abhängigkeit von dem Vergleich das zukünftige Erstellen der Vorhersage angepasst wird, wobei diese Adaption, nämlich Vergleich und davon abhängig Anpassung, wiederholt wird, insbesondere täglich wiederholt wird.

12. Verfahren nach einem der vorstehenden Ansprüche, **dadurch gekennzeichnet, dass**
- ein bzw. das Vorhersagemodell für Ankunftszeiten zum Erstellen und/oder Verändern der Vorhersage der Ankunftszeiten als adaptives Modell ausgeführt ist, das in Abhängigkeit von einem Vergleich zwischen vorhergesagten Ankunftszeiten und dazu eingetretenen Ankunftszeiten einen oder mehrere Modellparameter anpasst, und/oder dass
- ein bzw. das Vorhersagemodell für Einzelladezustände zum Erstellen und/oder Verändern der Einzelladezustandsvorhersage als adaptives Modell ausgeführt ist, das in Abhängigkeit von einem Vergleich zwischen vorhergesagten Einzelladezuständen und dazu eingetretenen Einzelladezuständen einen oder mehrere Modellparameter anpasst.

13. Verfahren nach einem der vorstehenden Ansprüche, **dadurch gekennzeichnet, dass**
- beim Erstellen
- der Gesamtladezustandsvorhersage,
- der Vorhersage der Ankunftszeiten und/oder
- einer bzw. der Einzelladezustandsvorhersage jeweils
- eine Wahrscheinlichkeitsbewertung (S) durchgeführt wird, insbesondere eine Wahrscheinlichkeitsverteilung zugeordnet wird.

14. Verfahren nach einem der vorstehenden Ansprüche, **dadurch gekennzeichnet, dass**
- fürjedes Elektrofahrzeug (351-355)
- eine Vorhersage der Ankunftszeit zusammen mit einer Wahrscheinlichkeitsbewertung, insbesondere mit einer Wahrscheinlichkeitsverteilung, und
- eine Einzelladezustandsvorhersage zusammen mit einer Wahrscheinlichkeitsbewertung, insbesondere mit einer Wahrscheinlichkeitsverteilung, erstellt und
- jeweils als Fahrzeugvorhersage zusammengefasst werden, und
- aus allen Fahrzeugvorhersagen nebst Wahrscheinlichkeitsbewertungen die Gesamtladezustandsvorhersage zusammen mit einer Wahrscheinlichkeitsbewertung, insbesondere mit einer Wahrscheinlichkeitsverteilung bestimmt wird und/oder
- aus allen Fahrzeugvorhersagen nebst Wahrscheinlichkeitsbewertung die Gesamtladezustandsvorhersage für einen vorbestimmten Wahrscheinlichkeitswert bestimmt wird, insbesondere für einen p-90, p-95, p-98 oder p-99-Wert.

15. Verfahren nach einem der vorstehenden Ansprüche, **dadurch gekennzeichnet, dass**
- die Planung des Leistungsaustausches so erfolgt, dass
- zum Austauschen mit dem elektrischen Versorgungsnetz (344) eine Austauschleistung, insbesondere ein Austauschleistungsverlauf oder ein Austauschleistungsband, angeboten wird, wobei
- die Austauschleistung, bzw. der Austauschleistungsverlauf oder das Austauschleistungsband in Abhängigkeit von der Gesamtladezustandsvorhersage ermittelt wird.

16. Ladeinfrastruktur (342), vorbereitet zum Planen eines Leistungsaustausches zwischen der Ladeinfrastruktur (242) und einem elektrischen Versorgungsnetz (344), wobei
- die Ladeinfrastruktur (342) mehrere Ladeterminals (361-365) zum Anschließen und Laden von Elektrofahrzeugen (351-355) aufweist, sodass die Elektrofahrzeuge (351-355) über die Ladeterminals (361-365) elektrische Leistung mit dem elektrischen Versorgungsnetz (344) austauschen können,
- jedes Elektrofahrzeug (351-355) einen elektrischen Speicher (371-375) mit variablem Einzelladezustand aufweist, zum Aufnehmen und Abgeben elektrischer Leistung,
- alle an die Ladeinfrastruktur (342) angeschlossenen Elektrospeicher einen Gesamtspeicher der Ladeinfrastruktur (342) bilden, der durch eine Gesamtspeicherkapazität und einen Gesamtladezustand (236) gekennzeichnet ist, wobei
- die Gesamtspeicherkapazität variabel ist und
- der Gesamtladezustand (236) variabel ist, wobei
- die Ladeinfrastruktur (342) dazu vorbereitet ist, insbesondere dazu eine Steuereinheit aufweist,
- eine Vorhersage von Ankunftszeiten der Elektrofahrzeuge (351-355) an ihren Ladeterminals (361-365) zu erstellen, und
- in Abhängigkeit von der Vorhersage der Ankunftszeiten eine Gesamtladezustandsvorhersage als Vorhersage des Gesamtladezustands (236) für einen Vorhersagezeitraum zu erstellen, wobei
- sie dazu vorbereitet ist, die Gesamtladezustandsvorhersage als zeitlichen Verlauf des Gesamtladezustands (236) zu erstellen und insbesondere ist sie dazu vorbereitet, dass
- die Gesamtladezustandsvorhersage in Abhängigkeit von Fahrplänen der Elektrofahrzeuge erstellt wird.

17. Ladeinfrastruktur (342) nach Anspruch 16, **dadurch gekennzeichnet**, das die Ladeinfrastruktur (342), insbesondere die Steuereinheit (360), dazu vorbereitet ist, ein Verfahren nach wenigstens einem der Ansprüche 1 bis 15 auszuführen.
